# EUROPEAN PATENT APPLICATION

(11) **EP 4 682 711 A1**
(43) Date of publication of application: **21.01.2026**
(21) Application number: 24777905.1
(22) Date of filing: 22.03.2024
(51) Int. Cl.: G06F 8/656

(54) **PATCH EXECUTION METHOD AND APPARATUS**

(30) Priority: 30.03.2023 CN 202310357995
(71) Applicant: Huawei Technologies Co., Ltd., Shenzhen, Guangdong 518129 (CN)
(72) Inventor: WU, Jun, Shenzhen, Guangdong 518129 (CN); DONG, Weihao, Shenzhen, Guangdong 518129 (CN)
(74) Representative: Pfenning, Meinig & Partner mbB
(86) International application number: PCT/CN2024/083258
(87) International publication number: WO 2024/199116

(57) **Abstract**

This application provides a patch execution method and apparatus. The method includes: obtaining a patch file, where the patch file is used to fix a defect in a first process, and a first thread-local variable is referenced in the patch file; creating a GOT in the patch file, where the GOT includes a first entry and a second entry; learning that an offset of the first thread-local variable is a first offset and a module ID of a module in which the first thread-local variable is located is a first ID; updating the first offset and the first ID to the GOT to obtain an updated patch file; running the updated patch file and obtaining an address of the first thread-local variable by using a first function, where the first function obtains the address of the first thread-local variable through the first offset and the first ID in the GOT; and invoking the first thread-local variable through the address of the first thread-local variable. Through this method, the patch file can invoke a thread-local variable in a process and a thread-local variable in a dynamic library.

## Description

This application claims priority to Chinese Patent Application No. 202310357995.6, filed with the China National Intellectual Property Administration on March 30, 2023 and entitled "PATCH EXECUTION METHOD AND APPARATUS", which is incorporated herein by reference in its entirety.

### TECHNICAL FIELD

This application relates to the field of computer technologies, and in particular, to a patch execution method and apparatus.

### BACKGROUND

A process may have a defect during running. To enable the process to normally run, the defect in the process needs to be fixed. If the process is suspended to fix the defect, performance and a running speed of the process are affected. How to fix the defect in the process without suspending the process needs further research.

### SUMMARY

This application provides a patch execution method and apparatus, so that a patch file can invoke a thread-local variable in a process and a thread-local variable in a dynamic library.

According to a first aspect, this application provides a patch execution method. The method includes: obtaining a patch file, where the patch file is used to fix a defect in a first process, a first thread-local variable is referenced in the patch file, and the first thread-local variable is a thread-local variable defined in the first process or a first dynamic library; creating a GOT in the patch file, where the GOT includes a first entry and a second entry, the first entry is an offset of the first thread-local variable, and the second entry is a module ID of a module in which the first thread-local variable is located; learning that the offset of the first thread-local variable is a first offset and the module ID of the module in which the first thread-local variable is located is a first ID; updating the first offset and the first ID to the GOT to obtain an updated patch file; running the updated patch file and obtaining an address of the first thread-local variable by using a first function, where the first function obtains the address of the first thread-local variable through the first offset and the first ID in the GOT; and invoking the first thread-local variable through the address of the first thread-local variable.

Herein, the module ID of the module in which the first thread-local variable is located may be a process ID of a process in which the first thread-local variable is located or a dynamic library ID of a dynamic library in which the first thread-local variable is located.

Through this method, the patch file can invoke a thread-local variable in a process and a thread-local variable in a dynamic library.

With reference to the first aspect, in a possible implementation, before obtaining the address of the first thread-local variable by using the first function, the method further includes: obtaining a first instruction that references the first thread-local variable in the patch file; and changing the first instruction to a second instruction if the first instruction is obtaining the address of the first thread-local variable without using a function. The second instruction is obtaining the address of the first thread-local variable by using the first function. Running the updated patch file and obtaining the address of the first thread-local variable by using the first function specifically includes: running the updated patch file and executing the second instruction in the updated patch file to obtain the address of the first thread-local variable by using the first function.

In this way, the first instruction is changed to the second instruction if the first thread-local variable is a thread-local variable in the first process and/or the first dynamic library and the first instruction is obtaining the address of the first thread-local variable without using a function. The second instruction is obtaining the address of the first thread-local variable by using a system function. This ensures that the patch file can normally invoke the first thread-local variable in the first process, and can also invoke the first thread-local variable in the first dynamic library.

With reference to the first aspect, in a possible implementation, changing the first instruction to the second instruction if the first instruction is obtaining the address of the first thread-local variable without using a function specifically includes: changing the first instruction to the second instruction if the first instruction is obtaining the address of the first thread-local variable without using a function and the first thread-local variable is a thread-local variable defined in the first dynamic library.

In this way, the first instruction is changed to the second instruction only if the first thread-local variable is a thread-local variable defined in the first dynamic library, to ensure that the patch file can normally invoke the first thread-local variable in the first dynamic library.

With reference to the first aspect, in a possible implementation, the method further includes: if the first thread-local variable is a thread-local variable defined in the first process, running the updated patch file and executing the first instruction in the updated patch file to obtain the address of the first thread-local variable.

The first instruction is obtaining the address of the first thread-local variable by using the first process. In this way, if the first thread-local variable is a thread-local variable defined in the first process, the first process may directly obtain the address of the first thread-local variable, and therefore the first instruction does not need to be changed to the second instruction.

With reference to the first aspect, in a possible implementation, updating the first offset and the first ID to the GOT to obtain the updated patch file specifically includes: before the patch file is loaded, learning that the offset of the first thread-local variable is the first offset, setting the module ID of the module in which the first thread-local variable is located to a second value, and updating the first offset and the second value to the GOT; and after the patch file is loaded, learning that the module ID of the module in which the first thread-local variable is located is a first value, and changing the module ID of the module in which the first thread-local variable is located in the GOT from the second value to the first value, to obtain the updated patch file.

In this way, whether the first thread-local variable is a thread-local variable in a process or a thread-local variable in a dynamic library is not distinguished. The module ID of the module in which the first thread-local variable is located is obtained after the patch file is loaded.

With reference to the first aspect, in a possible implementation, updating the first offset and the first ID to the GOT to obtain the updated patch file specifically includes: before the patch file is loaded, if the first thread-local variable is a thread-local variable defined in the first dynamic library, learning that the offset of the first thread-local variable is the first offset, setting the module ID of the module in which the first thread-local variable is located to the second value, and updating the first offset and the second value to the GOT; and after the patch file is loaded, if the first thread-local variable is a thread-local variable defined in the first dynamic library, learning that the module ID of the module in which the first thread-local variable is located is the first value, and changing the module ID of the module in which the first thread-local variable is located in the GOT from the second value to the first value, to obtain the updated patch file.

In this way, whether the first thread-local variable is a thread-local variable in the first process or a thread-local variable in the first dynamic library needs to be distinguished. If the first thread-local variable is a thread-local variable in the first dynamic library, a dynamic library ID of the first dynamic library in which the first thread-local variable is located is obtained after the patch file is loaded.

With reference to the first aspect, in a possible implementation, the method further includes: before the patch file is loaded, if the first thread-local variable is a thread-local variable defined in the first process, learning that the offset of the first thread-local variable is the first offset and the module ID of the module in which the first thread-local variable is located is the first ID, and updating the first offset and the first ID to the GOT, to obtain the updated patch file.

In this way, whether the first thread-local variable is a thread-local variable in the first process or a thread-local variable in the first dynamic library needs to be distinguished. If the first thread-local variable is a thread-local variable in the first process, a process ID of the first process in which the first thread-local variable is located may be obtained before the patch file is loaded.

With reference to the first aspect, in a possible implementation, a first thread control block stores content of a section in which the first thread-local variable is located in the first dynamic library or the first process. The first thread control block is used to store data for a first thread to invoke the first thread-local variable. The first ID is a dynamic library ID of the first dynamic library or a process ID of the first process. Obtaining the address of the first thread-local variable by using the first function specifically includes: obtaining addresses of a plurality of thread control blocks based on the first ID by using the first function; obtaining an address of the first thread control block from the addresses of the plurality of thread control blocks based on an ID of the first thread; obtaining the address of the first thread-local variable based on the address of the first thread control block and the first offset by using the first function; and transferring the address of the first thread-local variable to the first thread by using the first function.

In this way, regardless of whether the first thread-local variable is a thread-local variable in the first process or a thread-local variable in the first dynamic library, the address of the first thread-local variable is obtained by using the first function.

With reference to the first aspect, in a possible implementation, a first thread control block stores content of a section in which the first thread-local variable is located in the first dynamic library. The first thread control block is used to store data for a first thread to invoke the first thread-local variable. The first ID is a dynamic library ID of the first dynamic library. Obtaining the address of the first thread-local variable by using the first function specifically includes: obtaining addresses of a plurality of thread control blocks based on the first ID by using the first function; obtaining an address of the first thread control block from the addresses of the plurality of thread control blocks based on an ID of the first thread by using the first function; obtaining the address of the first thread-local variable based on the address of the first thread control block and the first offset by using the first function; and transferring the address of the first thread-local variable to the first thread by using the first function.

In this way, whether the first thread-local variable is a thread-local variable in the first process or a thread-local variable in the first dynamic library needs to be distinguished. If the first thread-local variable is a thread-local variable in the first dynamic library, the address of the first thread-local variable is obtained by using the first function.

With reference to the first aspect, in a possible implementation, a first thread control block stores content of a section in which the first thread-local variable is located in the first process. The first thread control block is used to store data for a first thread to invoke the first thread-local variable. The first ID is a process ID of the first process.

Running the updated patch file and executing the first instruction in the updated patch file to obtain the address of the first thread-local variable specifically includes: running the updated patch file and executing the first instruction in the updated patch file; in response to the first instruction, obtaining a start address of the first process by using the first process; determining addresses of a plurality of thread control blocks based on the start address of the first process, a second offset, and a third offset by using the first process, where the second offset is an offset of the first thread-local variable defined in the first process from the first instruction in the first process, and the third offset is a preset value; obtaining an address of the first thread control block from the addresses of the plurality of thread control blocks based on an ID of the first thread by using the first process; obtaining the address of the first thread-local variable based on the address of the first thread control block and the first offset by using the first process; and transferring the address of the first thread-local variable to the first thread by using the first process.

The third offset may be a size of one thread control block.

In this way, if the first thread-local variable is a thread-local variable in the first process, the address of the first thread-local variable may be directly obtained by using the first process.

According to a second aspect, this application provides a patch execution apparatus. The apparatus includes an obtaining module, an execution module, and an invoking module.

The obtaining module is configured to obtain a patch file. The patch file is used to fix a defect in a first process. A first thread-local variable is referenced in the patch file. The first thread-local variable is a thread-local variable defined in the first process or a first dynamic library.

The execution module is configured to:
create a GOT in the patch file, where the GOT includes a first entry and a second entry, the first entry is an offset of the first thread-local variable, and the second entry is a module ID of a module in which the first thread-local variable is located;
learn that the offset of the first thread-local variable is a first offset and the module ID of the module in which the first thread-local variable is located is a first ID;
update the first offset and the first ID to the GOT to obtain an updated patch file; and
run the updated patch file and obtain an address of the first thread-local variable by using a first function, where the first function obtains the address of the first thread-local variable through the first offset and the first ID in the GOT.

The invoking module is configured to invoke the first thread-local variable through the address of the first thread-local variable.

Through this method, the patch file can invoke a thread-local variable in a process and a thread-local variable in a dynamic library.

With reference to the second aspect, in a possible implementation, the execution module is further configured to:
obtain a first instruction that references the first thread-local variable in the patch file; and
change the first instruction to a second instruction if the first instruction is obtaining the address of the first thread-local variable without using a function, where the second instruction is obtaining the address of the first thread-local variable by using the first function.

The execution module is specifically configured to run the updated patch file and execute the second instruction in the updated patch file to obtain the address of the first thread-local variable by using the first function.

In this way, the first instruction is changed to the second instruction if the first thread-local variable is a thread-local variable in the first process and/or the first dynamic library and the first instruction is obtaining the address of the first thread-local variable without using a function. The second instruction is obtaining the address of the first thread-local variable by using a system function. This ensures that the patch file can normally invoke the first thread-local variable in the first process, and can also invoke the first thread-local variable in the first dynamic library.

With reference to the second aspect, in a possible implementation, the execution module is specifically configured to change the first instruction to the second instruction if the first instruction is obtaining the address of the first thread-local variable without using a function and the first thread-local variable is a thread-local variable defined in the first dynamic library.

In this way, the first instruction is changed to the second instruction only if the first thread-local variable is a thread-local variable defined in the first dynamic library, to ensure that the patch file can normally invoke the first thread-local variable in the first dynamic library.

With reference to the second aspect, in a possible implementation, the execution module is further configured to: if the first thread-local variable is a thread-local variable defined in the first process, run the updated patch file and execute the first instruction in the updated patch file to obtain the address of the first thread-local variable.

The first instruction is obtaining the address of the first thread-local variable by using the first process. In this way, if the first thread-local variable is a thread-local variable defined in the first process, the first process may directly obtain the address of the first thread-local variable, and therefore the first instruction does not need to be changed to the second instruction.

With reference to the second aspect, in a possible implementation, the execution module is specifically configured to:
before the patch file is loaded, learn that the offset of the first thread-local variable is the first offset, set the module ID of the module in which the first thread-local variable is located to a second value, and update the first offset and the second value to the GOT; and
after the patch file is loaded, learn that the module ID of the module in which the first thread-local variable is located is a first value, and change the module ID of the module in which the first thread-local variable is located in the GOT from the second value to the first value, to obtain the updated patch file.

In this way, whether the first thread-local variable is a thread-local variable in a process or a thread-local variable in a dynamic library is not distinguished. The module ID of the module in which the first thread-local variable is located is obtained after the patch file is loaded.

With reference to the second aspect, in a possible implementation, the execution module is specifically configured to:
before the patch file is loaded, if the first thread-local variable is a thread-local variable defined in the first dynamic library, learn that the offset of the first thread-local variable is the first offset, set the module ID of the module in which the first thread-local variable is located to the second value, and update the first offset and the second value to the GOT; and
after the patch file is loaded, if the first thread-local variable is a thread-local variable defined in the first dynamic library, learn that the module ID of the module in which the first thread-local variable is located is the first value, and change the module ID of the module in which the first thread-local variable is located in the GOT from the second value to the first value, to obtain the updated patch file.

In this way, whether the first thread-local variable is a thread-local variable in the first process or a thread-local variable in the first dynamic library needs to be distinguished. If the first thread-local variable is a thread-local variable in the first dynamic library, a dynamic library ID of the first dynamic library in which the first thread-local variable is located is obtained after the patch file is loaded.

With reference to the second aspect, in a possible implementation, the execution module is further configured to: before the patch file is loaded, if the first thread-local variable is a thread-local variable defined in the first process, learn that the offset of the first thread-local variable is the first offset and the module ID of the module in which the first thread-local variable is located is the first ID, and update the first offset and the first ID to the GOT, to obtain the updated patch file.

In this way, whether the first thread-local variable is a thread-local variable in the first process or a thread-local variable in the first dynamic library needs to be distinguished. If the first thread-local variable is a thread-local variable in the first process, a process ID of the first process in which the first thread-local variable is located may be obtained before the patch file is loaded.

With reference to the second aspect, in a possible implementation, a first thread control block stores content of a section in which the first thread-local variable is located in the first dynamic library or the first process. The first thread control block is used to store data for a first thread to invoke the first thread-local variable. The first ID is a dynamic library ID of the first dynamic library or a process ID of the first process.

The obtaining module is specifically configured to:
obtain addresses of a plurality of thread control blocks based on the first ID by using the first function;
obtain an address of the first thread control block from the addresses of the plurality of thread control blocks based on an ID of the first thread; and
obtain the address of the first thread-local variable based on the address of the first thread control block and the first offset by using the first function; and transfer the address of the first thread-local variable to the first thread by using the first function.

In this way, regardless of whether the first thread-local variable is a thread-local variable in the first process or a thread-local variable in the first dynamic library, the address of the first thread-local variable is obtained by using the first function.

With reference to the second aspect, in a possible implementation, a first thread control block stores content of a section in which the first thread-local variable is located in the first dynamic library. The first thread control block is used to store data for a first thread to invoke the first thread-local variable. The first ID is a dynamic library ID of the first dynamic library.

The obtaining module is specifically configured to:
obtain addresses of a plurality of thread control blocks based on the first ID by using the first function;
obtain an address of the first thread control block from the addresses of the plurality of thread control blocks based on an ID of the first thread by using the first function; and
obtain the address of the first thread-local variable based on the address of the first thread control block and the first offset by using the first function; and transfer the address of the first thread-local variable to the first thread by using the first function.

In this way, whether the first thread-local variable is a thread-local variable in the first process or a thread-local variable in the first dynamic library needs to be distinguished. If the first thread-local variable is a thread-local variable in the first dynamic library, the address of the first thread-local variable is obtained by using the first function.

With reference to the second aspect, in a possible implementation, a first thread control block stores content of a section in which the first thread-local variable is located in the first process. The first thread control block is used to store data for a first thread to invoke the first thread-local variable. The first ID is a process ID of the first process.

The obtaining module is specifically configured to:
run the updated patch file and execute the first instruction in the updated patch file;
in response to the first instruction, obtain a start address of the first process by using the first process;
determine addresses of a plurality of thread control blocks based on the start address of the first process, a second offset, and a third offset by using the first process, where the second offset is an offset of the first thread-local variable defined in the first process from the first instruction in the first process, and the third offset is a preset value;
obtain an address of the first thread control block from the addresses of the plurality of thread control blocks based on an ID of the first thread by using the first process;
obtain the address of the first thread-local variable based on the address of the first thread control block and the first offset by using the first process; and
transfer the address of the first thread-local variable to the first thread by using the first process.

The third offset may be a size of one thread control block.

In this way, if the first thread-local variable is a thread-local variable in the first process, the address of the first thread-local variable may be directly obtained by using the first process.

According to a third aspect, this application provides another patch execution apparatus. The apparatus includes a memory and a processor. The memory is configured to store computer program code. The computer program code includes computer instructions. The processor invokes the computer instructions, to enable the patch execution apparatus to:
obtain a patch file, where the patch file is used to fix a defect in a first process, a first thread-local variable is referenced in the patch file, and the first thread-local variable is a thread-local variable defined in the first process or a first dynamic library;
create a GOT in the patch file, where the GOT includes a first entry and a second entry, the first entry is an offset of the first thread-local variable, and the second entry is a module ID of a module in which the first thread-local variable is located;
learn that the offset of the first thread-local variable is a first offset and the module ID of the module in which the first thread-local variable is located is a first ID; and update the first offset and the first ID to the GOT to obtain an updated patch file;
run the updated patch file and obtain an address of the first thread-local variable by using a first function, where the first function obtains the address of the first thread-local variable through the first offset and the first ID in the GOT; and
invoke the first thread-local variable through the address of the first thread-local variable.

The patch file can invoke a thread-local variable in a process and a thread-local variable in a dynamic library.

With reference to the third aspect, in a possible implementation, the processor invokes the computer instructions, to enable the patch execution apparatus to:
obtain a first instruction that references the first thread-local variable in the patch file;
change the first instruction to a second instruction if the first instruction is obtaining the address of the first thread-local variable without using a function, where the second instruction is obtaining the address of the first thread-local variable by using the first function; and
run the updated patch file and execute the second instruction in the updated patch file to obtain the address of the first thread-local variable by using the first function.

In this way, the first instruction is changed to the second instruction if the first thread-local variable is a thread-local variable in the first process and/or the first dynamic library and the first instruction is obtaining the address of the first thread-local variable without using a function. The second instruction is obtaining the address of the first thread-local variable by using a system function. This ensures that the patch file can normally invoke the first thread-local variable in the first process, and can also invoke the first thread-local variable in the first dynamic library.

With reference to the third aspect, in a possible implementation, the processor invokes the computer instructions, to enable the patch execution apparatus to:
change the first instruction to the second instruction if the first instruction is obtaining the address of the first thread-local variable without using a function and the first thread-local variable is a thread-local variable defined in the first dynamic library.

In this way, the first instruction is changed to the second instruction only if the first thread-local variable is a thread-local variable defined in the first dynamic library, to ensure that the patch file can normally invoke the first thread-local variable in the first dynamic library.

With reference to the third aspect, in a possible implementation, the processor invokes the computer instructions, to enable the patch execution apparatus to:
if the first thread-local variable is a thread-local variable defined in the first process, run the updated patch file and execute the first instruction in the updated patch file to obtain the address of the first thread-local variable.

The first instruction is obtaining the address of the first thread-local variable by using the first process. In this way, if the first thread-local variable is a thread-local variable defined in the first process, the first process may directly obtain the address of the first thread-local variable, and therefore the first instruction does not need to be changed to the second instruction.

With reference to the third aspect, in a possible implementation, the processor invokes the computer instructions, to enable the patch execution apparatus to:
before the patch file is loaded, learn that the offset of the first thread-local variable is the first offset, set the module ID of the module in which the first thread-local variable is located to a second value, and update the first offset and the second value to the GOT; and
after the patch file is loaded, learn that the module ID of the module in which the first thread-local variable is located is a first value, and change the module ID of the module in which the first thread-local variable is located in the GOT from the second value to the first value, to obtain the updated patch file.

In this way, whether the first thread-local variable is a thread-local variable in a process or a thread-local variable in a dynamic library is not distinguished. The module ID of the module in which the first thread-local variable is located is obtained after the patch file is loaded.

With reference to the third aspect, in a possible implementation, the processor invokes the computer instructions, to enable the patch execution apparatus to:
before the patch file is loaded, if the first thread-local variable is a thread-local variable defined in the first dynamic library, learn that the offset of the first thread-local variable is the first offset, set the module ID of the module in which the first thread-local variable is located to the second value, and update the first offset and the second value to the GOT; and
after the patch file is loaded, if the first thread-local variable is a thread-local variable defined in the first dynamic library, learn that the module ID of the module in which the first thread-local variable is located is the first value, and change the module ID of the module in which the first thread-local variable is located in the GOT from the second value to the first value, to obtain the updated patch file.

In this way, whether the first thread-local variable is a thread-local variable in the first process or a thread-local variable in the first dynamic library needs to be distinguished. If the first thread-local variable is a thread-local variable in the first dynamic library, a dynamic library ID of the first dynamic library in which the first thread-local variable is located is obtained after the patch file is loaded.

With reference to the third aspect, in a possible implementation, the processor invokes the computer instructions, to enable the patch execution apparatus to: before the patch file is loaded, if the first thread-local variable is a thread-local variable defined in the first process, learn that the offset of the first thread-local variable is the first offset and the module ID of the module in which the first thread-local variable is located is the first ID, and update the first offset and the first ID to the GOT, to obtain the updated patch file.

In this way, whether the first thread-local variable is a thread-local variable in the first process or a thread-local variable in the first dynamic library needs to be distinguished. If the first thread-local variable is a thread-local variable in the first process, a process ID of the first process in which the first thread-local variable is located may be obtained before the patch file is loaded.

With reference to the third aspect, in a possible implementation, a first thread control block stores content of a section in which the first thread-local variable is located in the first dynamic library or the first process. The first thread control block is used to store data for a first thread to invoke the first thread-local variable. The first ID is a dynamic library ID of the first dynamic library or a process ID of the first process.

The processor invokes the computer instructions, to enable the patch execution apparatus to:
obtain addresses of a plurality of thread control blocks based on the first ID by using the first function;
obtain an address of the first thread control block from the addresses of the plurality of thread control blocks based on an ID of the first thread; and
obtain the address of the first thread-local variable based on the address of the first thread control block and the first offset by using the first function; and transfer the address of the first thread-local variable to the first thread by using the first function.

In this way, regardless of whether the first thread-local variable is a thread-local variable in the first process or a thread-local variable in the first dynamic library, the address of the first thread-local variable is obtained by using the first function.

With reference to the third aspect, in a possible implementation, a first thread control block stores content of a section in which the first thread-local variable is located in the first dynamic library. The first thread control block is used to store data for a first thread to invoke the first thread-local variable. The first ID is a dynamic library ID of the first dynamic library.

The processor invokes the computer instructions, to enable the patch execution apparatus to:
obtain addresses of a plurality of thread control blocks based on the first ID by using the first function;
obtain an address of the first thread control block from the addresses of the plurality of thread control blocks based on an ID of the first thread by using the first function; and
obtain the address of the first thread-local variable based on the address of the first thread control block and the first offset by using the first function; and transfer the address of the first thread-local variable to the first thread by using the first function.

In this way, whether the first thread-local variable is a thread-local variable in the first process or a thread-local variable in the first dynamic library needs to be distinguished. If the first thread-local variable is a thread-local variable in the first dynamic library, the address of the first thread-local variable is obtained by using the first function.

With reference to the third aspect, in a possible implementation, a first thread control block stores content of a section in which the first thread-local variable is located in the first process. The first thread control block is used to store data for a first thread to invoke the first thread-local variable. The first ID is a process ID of the first process.

The processor invokes the computer instructions, to enable the patch execution apparatus to:
run the updated patch file and execute the first instruction in the updated patch file;
in response to the first instruction, obtain a start address of the first process by using the first process;
determine addresses of a plurality of thread control blocks based on the start address of the first process, a second offset, and a third offset by using the first process, where the second offset is an offset of the first thread-local variable defined in the first process from the first instruction in the first process, and the third offset is a preset value;
obtain an address of the first thread control block from the addresses of the plurality of thread control blocks based on an ID of the first thread by using the first process;
obtain the address of the first thread-local variable based on the address of the first thread control block and the first offset by using the first process; and
transfer the address of the first thread-local variable to the first thread by using the first process.

The third offset may be a size of one thread control block.

In this way, if the first thread-local variable is a thread-local variable in the first process, the address of the first thread-local variable may be directly obtained by using the first process.

According to a fourth aspect, this application provides a computer-readable storage medium, configured to store computer instructions. When the computer instructions are run on a patch execution apparatus, the patch execution apparatus is enabled to perform the patch execution method according to any possible implementation of the first aspect.

According to a fifth aspect, this application provides a computer program product. When the computer program product is run on a patch execution apparatus, the patch execution apparatus is enabled to perform the patch execution method according to any possible implementation of the first aspect.

For beneficial effects of the second aspect to the fifth aspect, refer to descriptions of beneficial effects in the first aspect. Details are not described herein again in this application.

### BRIEF DESCRIPTION OF DRAWINGS

FIG. 1 is a schematic flowchart of a patching method according to an embodiment of this application;
FIG. 2 is a diagram of making a patch file according to an embodiment of this application;
FIG. 3A is an implementation diagram of generating a patch file according to an embodiment of this application;
FIG. 3B is a diagram of a software structure for a patch to take effect according to an embodiment of this application;
FIG. 4 is a diagram of a method for loading and running a patch function according to an embodiment of this application;
FIG. 5 shows a patch loading process on a datacom V8 platform according to an embodiment of this application;
FIG. 6A to FIG. 6G are diagrams of code implementations according to an embodiment of this application;
FIG. 7 is a schematic flowchart of a function execution method according to this application;
FIG. 8 is a diagram of a patch execution apparatus according to this application; and
FIG. 9 is a diagram of another patch execution apparatus according to this application.

### DESCRIPTION OF EMBODIMENTS

The technical solutions in embodiments of this application are described clearly and in detail below with reference to the accompanying drawings. In the descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more.

In the following, the terms "first" and "second" are merely intended for the purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

First, technical terms in this application are explained.

### 1. Process and thread

The process is a program with a specific independent feature on a computer. It is a running activity about a dataset. The process is also a basis of an operating system structure. An application on the computer is run by the process.

The thread is an execution unit in the process, and is responsible for executing a program in the process. One process has at least one thread. One process may have a plurality of threads. The computer allocates resources to the process. All threads in a same process share all resources of the process.

### 2. Variable and thread-local variable (thread local storage, TLS)

The variable is a name representing some values represented in a memory of a computer, and is usually a letter, a character, or a word. The variable is an abstract concept that can store a computing result or represent a value in a computer language. The variable is also a place where data is temporarily stored when an application on the computer is running. The variable may be accessed through an address of the variable.

As its name implies, the thread-local variable is a name representing some values and defined in a thread. The thread-local variable may be accessed through an address of the thread-local variable. When the thread-local variable is accessed by another thread, a data structure is the same, but a value is different. In other words, the thread-local variable can have different values in different threads. If thread-local variable sharing can be implemented, one thread-local variable can be created and shared by a plurality of threads. In addition, memory space occupied by creating a plurality of thread-local variables can be reduced.

Thread-local variables may include a static thread-local variable and a global thread-local variable. The static thread-local variable may also be referred to as a local thread-local variable. The local thread-local variable can be invoked only by a current file, and cannot be invoked by the other files. For example, one process may include a plurality of files. For example, the plurality of files may include a first file, a second file, and a third file. A first thread-local variable is defined in the first file. The first thread-local variable is a static thread-local variable. In this case, the first thread-local variable can be invoked only by the first file, and cannot be invoked by the second file and the third file.

The global thread-local variable can be invoked not only by a current file, but also by the other files. In other words, the global thread-local variable can be invoked by all files to implement sharing. For example, one process may include a plurality of files. For example, the plurality of files may include a first file, a second file, and a third file. A first thread-local variable is defined in the first file. The first thread-local variable is a global thread-local variable. In this case, the first thread-local variable can be invoked not only by the first file, but also by the second file and the third file.

### 3. Dynamic library (dynamic link library, DLL)

The dynamic library is also referred to as a dynamic-link library. The DLL is a library containing code and data that can be simultaneously used by a plurality of programs. The DLL is not an executable file. Dynamic linking provides a way for a process to invoke a function that is not part of its executable code. Executable code of a function is in a DLL. The DLL contains one or more functions that have been compiled, linked, and stored separately from processes using them. The DLL also facilitates data and resource sharing.

The dynamic library includes thread-local variables. The thread-local variables in the dynamic library include a static thread-local variable and a global thread-local variable. Rules for invoking the static thread-local variable and the global thread-local variable in the dynamic library are similar to rules for invoking a static thread-local variable and a global thread-local variable in a process. For details, refer to the foregoing descriptions. Details are not described herein again in this application.

4. Hot patch: Some vulnerabilities and defects in a process are fixed without restarting the process.

This application provides a patching method. This application supports a method for referencing a thread-local variable in a process and/or a thread-local variable in a dynamic library in a patch file. Before the patch file is run, it is determined that a first thread-local variable is referenced in the patch file, and a GOT corresponding to the first thread-local variable may be created in the patch file. The GOT includes two entries: an offset and a module ID. First, a value is assigned to the offset in the GOT when the patch file is being made. Then, a value of the module ID in the GOT is changed when the patch file is being loaded. Finally, the offset and the module ID in the GOT are used as input parameters of a first function, so that the first function can obtain an address of the first thread-local variable. When the patch file is being run, the first thread-local variable may be referenced based on the address of the first thread-local variable.

It should be noted that it is not limited to one thread-local variable, and more thread-local variables may be referenced in the patch file. This is not limited in this application. This application is merely described by using an example in which the first thread-local variable is referenced in the patch file.

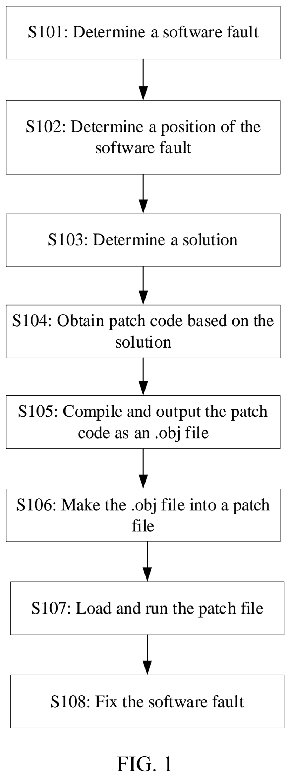

FIG. 1 is a schematic flowchart of a patching method according to an embodiment of this application.

S101: Determine a software fault.

The software fault may be that a feature implemented in software is different from an expected feature. Therefore, the software fault needs to be fixed, so that the software can implement the expected feature.

Alternatively, the software fault may be a code writing error in software, which causes the software to report an error during execution. The software fault needs to be fixed, so that the software can normally run.

S102: Determine a position of the software fault.

The position of the software fault may be determined based on the software fault in S101.

S103: Determine a solution.

A worker may determine the solution based on the software fault. The solution can fix the software fault.

S104: Obtain patch code based on the solution.

The worker may rewrite code based on the solution to obtain the patch code. The patch code can fix the software fault.

S105: Compile and output the patch code as an .obj file.

The .obj file is in a format of a binary file. It is classified as a relocatable object file and obtained by compiling a source file through a compiler. To make a patch herein, the patch code needs to be compiled into the .obj file.

S106: Make the .obj file into a patch file.

The .obj file output after compiling the patch code may be made into the patch file through a patch tool.

A GOT corresponding to a thread-local variable (for example, a first thread-local variable) referenced in the patch file further needs to be created in the patch file. The GOT includes two entries: an offset of the first thread-local variable and a module ID of a module in which the first thread-local variable is located. A value is assigned to the offset of the first thread-local variable in the GOT when the patch file is being made.

The patch file can fix a vulnerability and defect in a program.

S107: Load and run the patch file.

Loading and running the patch file includes the following steps: loading the patch file, processing a symbol in the patch file, running the patch file, and the like. After the patch file is loaded, a value needs to be assigned to the module ID of the module in which the first thread-local variable is located in the GOT in the patch file. Then, a first function (for example, a __tls_get_addr function) may be used to obtain an address of the first thread-local variable based on the offset of the first thread-local variable and the module ID of the module in which the first thread-local variable is located. When the patch file is being run, the first thread-local variable may be accessed through the address of the first thread-local variable, to reference a thread-local variable in a process and/or a dynamic library in the patch.

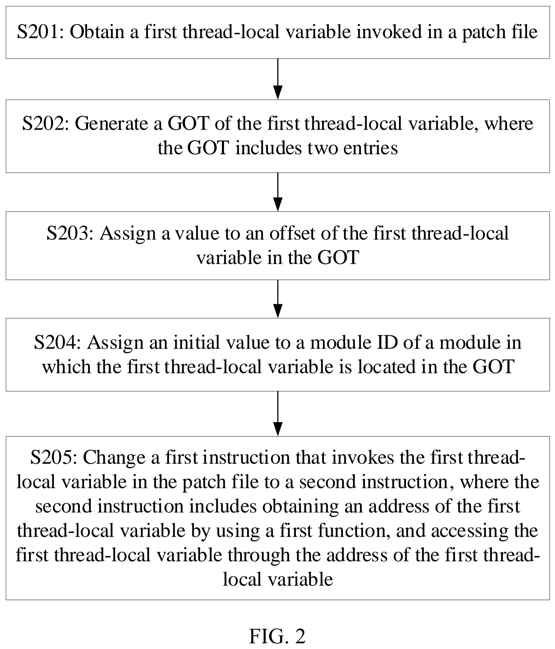

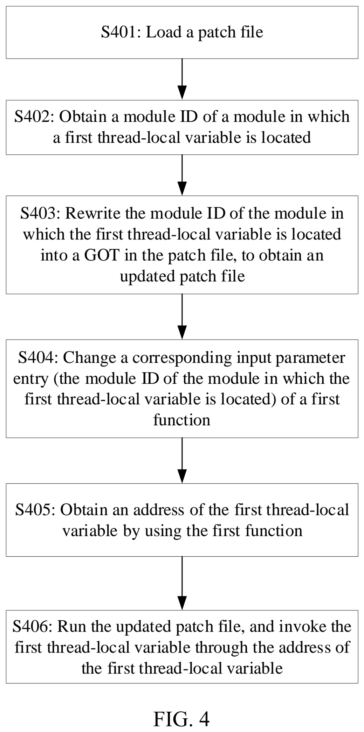

For detailed descriptions of S107 in this embodiment, refer to descriptions in embodiments in FIG. 2 and FIG. 4. Details are not described herein in this application.

S108: Fix the software fault.

After the patch file is run, the fault and vulnerability in the software can be fixed. In this way, some vulnerabilities and defects in the program can be fixed without restarting the program.

The following describes in detail how to make a patch file.

To make a patch file, a GOT corresponding to a thread-local variable (for example, a first thread-local variable) referenced in the patch file needs to be created in the patch file. The GOT includes two entries: an offset of the first thread-local variable and a module ID of a module in which the first thread-local variable is located. A value is assigned to the offset of the first thread-local variable in the GOT when the patch file is being made.

FIG. 2 is a diagram of making a patch file.

S201: Obtain a first thread-local variable invoked in a patch file.

The first thread-local variable may be a thread-local variable in a process or a thread-local variable in a dynamic library.

S202: Generate a GOT of the first thread-local variable. The GOT includes two entries.

**Table 1**

| Offset of a thread-local variable | Module ID of a module in which the thread-local variable is located |
|---|---|
| | |

Table 1 shows a generated GOT. The GOT includes at least two entries: the offset of the thread-local variable and the module ID of the module in which the thread-local variable is located.

The offset of the thread-local variable is an offset in a section in which the thread-local variable is located. The section may include a data section, a code section, a symbol table section, or the like. For example, the thread-local variable may be in a .bin file or a .so file. The .bin file is an executable file of a process. The .so file can be loaded by a file of a process to execute code in the .so file. The .bin file may include a plurality of sections. The section in which the thread-local variable is located may be determined from the plurality of sections, to determine an offset of a position of the thread-local variable in the section from a start of the section. For example, the thread-local variable is an n^{th} thread-local variable defined in the section. If a size of each variable is m, the offset of the thread-local variable from the start of the section is (n - 1) x m.

Similarly, the .so file may also include a plurality of sections. The section in which the thread-local variable is located may be determined from the plurality of sections, to determine an offset of a position of the thread-local variable in the section from a start of the section. For example, the thread-local variable is an n^{th} thread-local variable defined in the section. If a size of each variable is m, the offset of the thread-local variable from the start of the section is (n - 1) x m.

The module ID of the module in which the thread-local variable is located is a process ID of a process in which the thread-local variable is located or a dynamic library ID of a dynamic library in which the thread-local variable is located. The process ID is a process number. After the process is started, the process ID is uniquely determined. The dynamic library ID is a dynamic library number. After the dynamic library is run, the dynamic library ID is uniquely determined.

S203: Assign a value to an offset of the first thread-local variable in the GOT.

After the first thread-local variable referenced in the patch file is determined, the offset of the first thread-local variable may be determined. Therefore, the offset of the first thread-local variable may be directly written into the GOT. In other words, the value is assigned to the offset of the first thread-local variable in the GOT.

S204: Assign an initial value to a module ID of a module in which the first thread-local variable is located in the GOT.

After the first thread-local variable referenced in the patch file is determined, a value further needs to be assigned to the module ID of the module in which the first thread-local variable is located in the GOT.

S204 includes but is not limited to the following two implementations.

In a first implementation, whether the first thread-local variable is a thread-local variable in a process or a thread-local variable in a dynamic library is not distinguished. The initial value is directly assigned to the module ID of the module in which the first thread-local variable is located. The initial value may be a preset value.

After a patch is loaded, whether the first thread-local variable is defined in a process or a dynamic library is distinguished. If the first thread-local variable is a thread-local variable defined in a process, a process ID of a first process may be obtained. Then, the module ID in a new GOT is changed from the initial value to the process ID of the first process. If the first thread-local variable is a thread-local variable defined in a dynamic library, a dynamic library ID of a first dynamic library may be obtained. Then, the module ID in a new GOT is changed from the initial value to the dynamic library ID of the first dynamic library.

In a second implementation, whether the first thread-local variable is a thread-local variable in a process or a thread-local variable in a dynamic library needs to be distinguished.

If the first thread-local variable is a thread-local variable in a process, a process ID of the process in which the first thread-local variable is located may be determined. The process is a to-be-patched process. For example, the process may be a process position corresponding to the software fault shown in S101. For example, the process may be referred to as a first process. The first process is running without being restarted. Therefore, a process ID of the first process can be determined. After the process ID of the first process in which the first thread-local variable is located is determined, the process ID of the first process may be assigned as the module ID of the module in which the first thread-local variable is located in the GOT.

If the first thread-local variable is a thread-local variable in a dynamic library, because the patch file is made offline, the patch file cannot determine a dynamic library ID of an invoked dynamic library. A dynamic library ID of a first dynamic library in which the first thread-local variable is located can be dynamically obtained only after the patch file is loaded. Therefore, before the patch file is loaded and run, the initial value may be assigned to the dynamic library ID of the first dynamic library in which the first thread-local variable is located. After the patch file is loaded and run and it is determined that the dynamic library ID of the first dynamic library is a first value, the dynamic library ID of the first dynamic library in which the first thread-local variable is located in the GOT is changed from the initial value to the first value. A one-to-one correspondence between the dynamic library ID (the first value) of the first dynamic library and a name of the first dynamic library further needs to be stored.

For example, the first process may invoke the first thread-local variable in the first dynamic library. In this case, the dynamic library ID of the first dynamic library invoked by the first process may be 1. Next, the first process may invoke a second thread-local variable in a second dynamic library. In this case, a dynamic library ID of the second dynamic library invoked by the first process may be 2. Then, the first process may invoke a third thread-local variable in a third dynamic library. In this case, a dynamic library ID of the third dynamic library invoked by the first process may be 3.

A second process may also invoke dynamic libraries. The second process may invoke the second thread-local variable in the second dynamic library. In this case, a dynamic library ID of the second dynamic library invoked by the second process may be 1. Then, the second process may invoke the first thread-local variable in the first dynamic library. In this case, a dynamic library ID of the first dynamic library invoked by the first process may be 2.

It can be learned that different processes invoke dynamic libraries in isolation from each other and without mutual interference. Dynamic library IDs of different dynamic libraries invoked by a same process are related to an order in which the process invokes the dynamic libraries.

Therefore, if the patch file invokes a thread-local variable in a dynamic library, a dynamic library ID of the dynamic library invoked by the patch file can be dynamically obtained only after the patch file is loaded. The dynamic library ID of the dynamic library cannot be obtained offline. The dynamic library invoked by the patch file may have been invoked by the first process, or may not have been invoked by the first process. If the dynamic library has been invoked by the first process, the dynamic library ID of the dynamic library is determined, but cannot be obtained offline. The dynamic library ID of the dynamic library can be obtained only after the patch file is loaded. If the dynamic library has not been invoked by the first process, the dynamic library ID of the dynamic library is unknown, and cannot be obtained offline. The dynamic library ID of the dynamic library can be obtained only after the patch file is loaded.

After a process is loaded, a process ID of the process is uniquely determined, for example, 1. Therefore, if a thread-local variable invoked in the patch file is a thread-local variable in a process, a process ID of the process can be obtained offline.

S205: Change a first instruction that invokes the first thread-local variable in the patch file to a second instruction. The second instruction includes obtaining an address of the first thread-local variable by using a first function, and accessing the first thread-local variable through the address of the first thread-local variable.

In S205, whether the first thread-local variable is a thread-local variable in a process or a thread-local variable in a dynamic library is not distinguished. The first instruction that invokes the first thread-local variable in the patch file is directly obtained. Before S205 is performed, it needs to be determined whether the first instruction is implemented by obtaining the address of the first thread-local variable by using a function and then accessing the first thread-local variable. If the first instruction is not implemented by obtaining the address of the first thread-local variable by using a function and then accessing the first thread-local variable, the first instruction needs to be changed to the second instruction. The second instruction includes obtaining the address of the first thread-local variable by using the first function, and accessing the first thread-local variable through the address of the first thread-local variable. This can avoid that an error occurs when the first thread-local variable is accessed by using the first instruction if the first thread-local variable is a thread-local variable in a dynamic library. If the first instruction is implemented by obtaining the address of the first thread-local variable by using a function and then accessing the first thread-local variable, the first instruction does not need to be changed. The first instruction is implemented by obtaining the address of the first thread-local variable by using a function and then accessing the first thread-local variable. This can ensure that no error occurs when a thread-local variable in a process or a thread-local variable in a dynamic library is accessed.

An objective of performing the foregoing determining step is as follows: After a process is started and before the process is terminated and then restarted, an address of a thread-local variable in the process is uniquely determined. The process can directly obtain the address of the first thread-local variable.

However, a dynamic library may be invoked by different processes. When a first thread in the first process invokes a thread-local variable (for example, the first thread-local variable) in the first dynamic library, to isolate data for different threads to invoke a same thread-local variable, one thread control block may be created for each thread. Thread control blocks are used to store data of different threads. Addresses of different thread control blocks are also different. For example, a first thread control block is created. The first thread control block is used to store data of the first thread, and stores a correspondence between an ID of the first thread and an ID of the first thread control block. After the first thread control block of the thread is created, a section in which the first thread-local variable is located in the first dynamic library is copied and stored in the first thread control block, and the first thread control block is stored in memory space allocated by the first process.

For another example, when a second thread in the first process invokes a thread-local variable (for example, the first thread-local variable) in the first dynamic library, a second thread control block is also created. The second thread control block is used to store data of the second thread, and stores a correspondence between an ID of the second thread and an ID of the second thread control block. After the second thread control block of the thread is created, the section in which the first thread-local variable is located in the first dynamic library is copied and stored in the second thread control block, and the second thread control block is stored in memory space allocated by the first process.

Different processes randomly load a dynamic library, and a same dynamic library may be simultaneously invoked by a plurality of different processes. Therefore, when a thread in a same process invokes a thread-local variable in a same dynamic library at different moments, storage addresses of a section in which the thread-local variable is located in the dynamic library are different, that is, storage addresses of a thread control block are different. For example, when the first thread in the first process invokes the first thread-local variable in the first dynamic library for the first time, a storage address of the first thread control block is a first address. When the first thread-local variable in the first dynamic library is invoked for the second time after the first process is restarted, a storage address of the first thread control block is a second address. The second address and the first address may be different, or may be the same in some embodiments. In addition, the address of the first thread control block is randomly allocated. The address of the first thread control block is irrelevant to an offset of the first thread-local variable defined in the first dynamic library from a start address of the first dynamic library. The first process cannot obtain the address of the first thread control block corresponding to the first thread-local variable in the dynamic library in each invocation.

After the patch file is loaded, if the first thread-local variable is invoked in the patch file, the address of the first thread control block corresponding to the first thread needs to be determined, to determine the address of the first thread-local variable. The first process cannot obtain the address of the first thread control block corresponding to the first thread-local variable in the dynamic library. In this case, a system function, for example, the first function, may be invoked. The address of the first thread control block is obtained by using the first function. Specifically, the dynamic library ID of the first dynamic library and a first offset may be used as input parameters of the first function. The first function may obtain, based on the dynamic library ID of the first dynamic library, addresses of a plurality of thread control blocks corresponding to the first thread-local variable in the first dynamic library. Because the first thread-local variable may be invoked by a plurality of threads, a thread control block corresponding to each thread needs to be created. Next, the first function determines the address of the first thread control block from the plurality of thread control blocks based on the ID of the first thread. The first thread control block is used to store the data of the first thread. Then, the first function obtains the address of the first thread-local variable in the first dynamic library based on the address of the first thread control block and the first offset. Further, the first thread-local variable may be invoked based on the address of the first thread-local variable. Herein, the first offset may be the offset of the first thread-local variable recorded in the GOT.

Therefore, if the first thread-local variable invoked in the patch file is a thread-local variable in the first dynamic library, the first process cannot obtain the address of the first thread control block corresponding to the first thread-local variable. In this case, the address of the first thread-local variable invoked in the patch file cannot be obtained. After the patch file is loaded, the address of the first thread control block needs to be obtained by using the system function. Therefore, it needs to be determined whether the first instruction is implemented by obtaining the address of the first thread-local variable by using the system function and then accessing the first thread-local variable. If the first instruction is implemented by obtaining the address of the first thread-local variable by using the system function and then accessing the first thread-local variable, the first instruction does not need to be changed to the second instruction. If the first instruction is not implemented by obtaining the address of the first thread-local variable by using the system function and then accessing the first thread-local variable, the first instruction needs to be changed to the second instruction. The second instruction includes obtaining the address of the first thread-local variable by using the first function.

Based on the foregoing analysis, in another possible implementation, S205 may alternatively be replaced with another implementation.

Specifically, whether the first thread-local variable is a thread-local variable in a process or a thread-local variable in a dynamic library needs to be distinguished. If the first thread-local variable is a thread-local variable in the first process, and the first instruction is not obtaining the address of the first thread-local variable by using a function and then accessing the first thread-local variable, but directly obtaining the address of the first thread-local variable and then accessing the first thread-local variable, the first instruction may not be changed to the second instruction, and the first thread-local variable may be directly accessed based on the first instruction. Certainly, the first instruction may alternatively be changed to the second instruction, and the first thread-local variable is accessed by using the second instruction.

If the first thread-local variable is a thread-local variable in the first dynamic library, and the first instruction is not obtaining the address of the first thread-local variable by using a function and then accessing the first thread-local variable, but directly obtaining the address of the first thread-local variable and then accessing the first thread-local variable, the first instruction needs to be changed to the second instruction, and the first thread-local variable is accessed by using the second instruction. This avoids an access error. If the first instruction is obtaining the address of the first thread-local variable by using a function and then accessing the first thread-local variable, the first thread-local variable may be accessed by using an address instruction.

After the first instruction is changed to the second instruction, the two entries in the GOT may be used as input parameters of the first function, so that the first function can obtain the address of the first thread-local variable and access the first thread-local variable. If the first thread-local variable is a thread-local variable in the first dynamic library, because the patch file is made offline, the dynamic library ID of the first dynamic library in which the first thread-local variable is located in the GOT cannot be determined. Therefore, in S205, the address of the first thread-local variable cannot be obtained by using the first function. In this case, input parameters of the first function may be prepared first. After the dynamic library ID of the first dynamic library is determined subsequently, the dynamic library ID of the first dynamic library in which the first thread-local variable is located in the GOT is changed, so that the first function can obtain the address of the first thread-local variable.

After the first instruction is changed to the second instruction, obtaining the address of the first thread-local variable by using the first function specifically includes:

If the first thread-local variable is a thread-local variable defined in the first process, the first function may obtain, through the process ID of the first process, addresses of a plurality of thread control blocks corresponding to the first thread-local variable in the first process. Because the first thread-local variable may be invoked by a plurality of threads, a thread control block corresponding to each thread needs to be created. Next, the first function determines the address of the first thread control block from the plurality of thread control blocks based on the ID of the first thread. Then, the first function obtains the address of the first thread-local variable based on the address of the first thread control block and the offset of the first thread-local variable.

If the first thread-local variable is a thread-local variable defined in the first dynamic library, when the first thread-local variable is invoked by the first thread, the first function may obtain thread control block IDs of one or more thread control blocks in the first dynamic library through the dynamic library ID of the first dynamic library. Next, the first function obtains, from the IDs of the one or more thread control blocks based on the ID of the first thread, the ID of the first thread control block corresponding to the ID of the first thread. Then, the first function obtains the address of the first thread control block based on the ID of the first thread control block. Finally, the first function obtains the address of the first thread-local variable based on the address of the first thread control block and the offset of the first thread-local variable. The first function then transfers the address of the first thread-local variable to the first thread in the first process, so that the first thread can invoke the first thread-local variable based on the address of the first thread-local variable.

If the first thread-local variable is a thread-local variable in the first process, in S205, the first instruction may be directly executed, and the address of the first thread-local variable is obtained by using the first process. An offset of the first thread-local variable defined in the first process from a start address of the first process is determined. For example, the first process includes p sections. The sections may include a data section, a code section, a symbol table section, and the like. The first thread-local variable is in a (p + 1)^{th} section. A total length of the first p sections is q. The first thread-local variable is an n^{th} thread-local variable defined in the (p + 1)^{th} section. If a size of each variable is m, an offset of the first thread-local variable from a start of the first process is q + (n - 1) x m.

Herein, the offset of the first thread-local variable in the first process from the start of the first process is constant. An offset of the first instruction in the first process from the start of the first process is also constant. Therefore, an offset of the first thread-local variable in the first process from the first instruction in the first process is also constant. The offset of the first thread-local variable in the first process from the first instruction in the first process may be denoted as a second offset. The second offset is a constant value. The second offset is similar to the offset of the first thread-local variable from the start of the first process.

After the first process is started, a storage address is allocated to the first thread-local variable in the first process. The storage address is used to store content of a section in which the first thread-local variable is located. The storage address may be obtained based on the start address of the first process and the second offset.

For example, when a first thread in the first process invokes a thread-local variable (for example, the first thread-local variable) in the first process, to isolate data for different threads to invoke a same thread-local variable, one thread control block may be created for each thread. For example, a first thread control block may be created for the first thread, and a section in which the first thread-local variable is located in the first process is copied and stored in the first thread control block. The section in which the first thread-local variable is located in the first process may be obtained based on the start address of the first process and a storage address indicated by the second offset. Alternatively, the section in which the first thread-local variable is located in the first process may be obtained from a file of the first process. A storage address of the first thread control block may be obtained based on an address of the first instruction in the first process, the second offset, and a third offsets. The third offset is a preset value. a is a positive integer greater than or equal to 1. For example, the third offset may be a size of one thread control block. When the second thread in the first process invokes the first thread-local variable in the first process, the second thread control block may be created for the second thread, and the section in which the first thread-local variable is located in the first process is copied and stored in the second thread control block. The section in which the first thread-local variable is located in the first process may be obtained based on the start address of the first process and the storage address indicated by the second offset. Alternatively, the section in which the first thread-local variable is located in the first process may be obtained from the file of the first process. A storage address of the second thread control block may be obtained based on the address of the first instruction in the first process, the second offset, and b third offsets. b is a positive integer greater than 1. b is greater than a. For example, a may be 1, and b may be 2.

Thread control blocks are used to store data of different threads. Addresses of different thread control blocks are also different. However, addresses of one or more thread control blocks corresponding to one or more threads that invoke the first thread-local variable may be determined based on the address of the first instruction in the first process and the second offset. The first process may directly obtain the address of the first instruction in the first process and the second offset. Therefore, the first process can directly obtain the address of the thread control block corresponding to the thread that invokes the first thread-local variable in the first process.

After the patch file is loaded, if the first thread-local variable is invoked in the patch file, the address of the first thread control block corresponding to the first thread needs to be determined, to determine the address of the first thread-local variable. The first process can directly obtain the address of the first thread control block corresponding to the first thread-local variable. Therefore, the first instruction may be directly executed to obtain the address of the first instruction and the second offset. The first process may obtain the addresses of the plurality of thread control blocks based on the address of the first instruction and the second offset. Next, the first process determines the address of the first thread control block from the addresses of the plurality of thread control blocks based on the ID of the first thread. Then, the first process obtains the address of the first thread-local variable based on the address of the first thread control block and the first offset.

Optionally, if the first thread-local variable is a thread-local variable in the first process, the GOT does not need to be created in the patch file.

It should be noted that in this application, S204 may alternatively be performed before S203, and S205 may alternatively be performed in, before, or after any one of S202, S203, and S204. Execution steps in the embodiment in FIG. 2 are not limited in this application.

The following describes in detail how to make a patch file based on an .obj file.

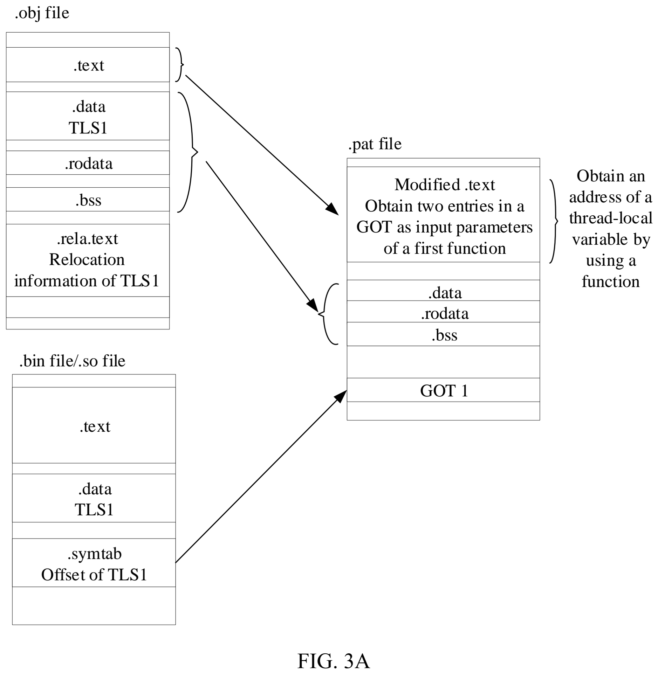

FIG. 3A is an implementation diagram of generating a patch file.

The .obj file may be generated based on patch code written by a user.

The .obj file includes a plurality of sections, for example, ".text", ".tdata", ".rodata", ".bss", and ".rela.text" sections. Different sections record different content. For example, the ".text" section may record a plurality of execution instructions of the patch code. The ".tdata" section records invocation of TSL1. The ".rela.text" section records relocation information of TLS1. The relocation information of TLS1 is used to find a position of TLS1 in the ".text" section.

It should be noted that the .obj file may further include more other sections. This is not limited in this application. TSL1 may also be referred to as a first thread-local variable.

When the patch file is being made, it needs to be determined whether an instruction that invokes TLS1 in the ".text" section of the .obj file is obtained by using a function.

The ".rela.text" section is used to find a position of the instruction that invokes TLS1 in the ".text" section. After the position of the instruction that invokes TLS1 in the ".text" section is determined, the instruction that invokes TLS1 needs to be changed. To directly access TLS1 based on its address, if TLS1 is a thread-local variable in a dynamic library, it cannot be directly accessed based on its address because an address of the thread-local variable in the dynamic library is not constant. Therefore, to avoid that TLS1 is directly accessed based on its address and fails to be invoked, the instruction that invokes TLS1 in the ".text" section needs to be changed from accessing TLS1 based on its address to obtaining the address of TSL1 by using a first function and accessing TSL1. Input parameters of the first function are an offset in a section in a file in which TLS1 is located and a module ID of a module in which TLS1 is located. The first function can accurately obtain the address of TLS1 based on the offset in the section in the file in which TLS1 is located and the module ID of the module in which TLS1 is located.

In another embodiment, if the instruction that invokes TLS1 is implemented by obtaining the address of TSL1 by using the first function and accessing TSL1, the instruction does not need to be changed.

Then, the sections in the .obj file are copied to a .pat file. For example, the ".text", ".tdata", ".rodata", and ".bss" sections in the .obj file are copied to the .pat file.

In another embodiment, if TLS1 is a thread-local variable in a dynamic library, the instruction that invokes TLS1 may be changed to obtaining the address of TSL1 by using the first function and accessing TSL1, or may not be changed. This is not limited in this application.

To record the offset in the section in the file in which TLS1 is located and the module ID of the module in which TLS1 is located, a GOT 1 needs to be created in the .pat file. The GOT 1 includes two entries: an offset of TLS1 and the module ID of the module in which TLS1 is located.

It should be noted that if a plurality of thread-local variables are invoked in the .obj file, a plurality of GOTs need to be created in the .pat file. Different TLSs use different GOTs.

Optionally, in some embodiments, different thread-local variables may alternatively share a same GOT, but entries of the thread-local variables are different. This is not limited in this application.

After the GOT 1 is created in the .pat file, the offset of TLS1 in the GOT 1 needs to be entered. The offset of TLS1 is the offset in the section in which TLS1 is defined in a .bin file or a .so file. Because the patch file is made offline, the module ID of the module in which TLS1 is located is unknown. In this case, the module ID of the module in which TLS1 is located in the GOT 1 cannot be obtained, and may be assigned an initial value first and changed subsequently.

The offset in the section in which TLS1 is located in the .bin file or the .so file may be directly obtained from the .bin file or the .so file.

As shown in FIG. 3A, the .bin file or the .so file also has a plurality of sections, for example, ".text", ".tdata", and ".symtab" sections. TLS1 may be defined in the ".tdata" section of the .bin file or the .so file. The offset of TLS1 in the ".tdata" section may be recorded in the ".symtab" section of the .bin file or the .so file. In this way, the offset of TLS1 can be directly obtained from the .bin file or the .so file.

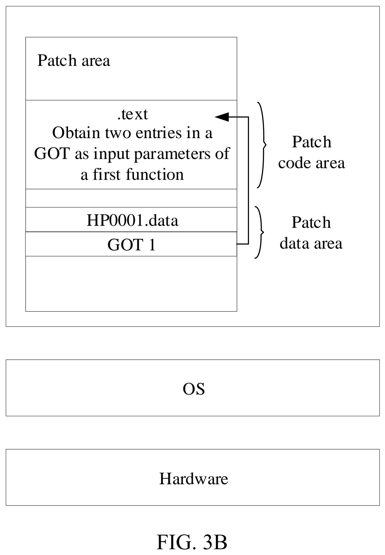

FIG. 3B is a diagram of a software structure for a patch to take effect.

As shown in FIG. 3B, the patch file generated in FIG. 3A may be preset in a patch area. The patch area is at an upper layer of hardware and an operating system (operating system, OS). When the patch file in the patch area is being run, a patch code area may invoke the GOT 1 in patch data, and obtain the address of TSL1 based on information in the GOT 1 by using a function. Further, when the patch file is being run, TSL1 may be invoked based on the address of TSL1.

The following describes in detail how to load and run a patch function.

FIG. 4 is a diagram of a method for loading and running a patch function.

S401: Load a patch file.

The patch file may be the patch file made in FIG. 2 and FIG. 3A.

S402: Obtain a module ID of a module in which a first thread-local variable is located.

After the patch file is loaded, the module ID of the module in which the first thread-local variable is located can be obtained.

If the module in which the first thread-local variable is located is a first dynamic library, after the patch file is loaded, the first dynamic library is run by a first process, and a dynamic library ID of the first dynamic library is uniquely determined. In this case, the dynamic library ID of the first dynamic library in which the first thread-local variable is located can be obtained.

If the module in which the first thread-local variable is located is the first process, a module ID of the first process in which the first thread-local variable is located may be determined in S402, or may be determined in S204. This is not limited in this application.

S403: Rewrite the module ID of the module in which the first thread-local variable is located into a GOT in the patch file, to obtain an updated patch file.

If the module in which the first thread-local variable is located is the first dynamic library, after the patch file is loaded and the dynamic library ID of the first dynamic library is determined, the module ID of the module in which the first thread-local variable is located in the GOT is changed from a preset value to the dynamic library ID of the first dynamic library.

If the module in which the first thread-local variable is located is the first process, in a possible implementation, after the patch file is loaded and the process ID of the first process is determined, the module ID of the module in which the first thread-local variable is located in the GOT may be changed from the preset value to the process ID of the first process. In another possible implementation, the module ID of the module in which the first thread-local variable is located in the GOT may be determined in S204. In this case, S403 does not need to be performed. This is not limited in this application.

In this way, after the module ID of the module in which the first thread-local variable is located and the offset of the first thread-local variable in the GOT are both determined, the updated patch file can be obtained.

S404: Change a corresponding input parameter entry (the module ID of the module in which the first thread-local variable is located) of a first function.

In S205, the GOT is used as input parameters of the first function. After the module ID of the module in which the first thread-local variable is located in the GOT is updated in S403, the corresponding input parameter entry (the module ID of the module in which the first thread-local variable is located) of the first function further needs to be changed.

Optionally, if the first thread-local variable is a thread-local variable in a process, the module ID of the module in which the first thread-local variable is located in the GOT may be determined in S204. In S205, the input parameter of the first function is correct. In this case, the input parameter entry (the module ID of the module in which the first thread-local variable is located) of the first function does not need to be changed. In other words, S404 does not need to be performed.

S405: Obtain an address of the first thread-local variable by using the first function.

S406: Run the updated patch file, and invoke the first thread-local variable through the address of the first thread-local variable.

After the input parameter of the first function is changed, the address of the first thread-local variable may be obtained by using the first function. When the updated patch file is being run, the first thread-local variable may be invoked through the address of the first thread-local variable obtained by using the first function.

Optionally, if the first thread-local variable is a thread-local variable in a process, the address of the first thread-local variable may alternatively be obtained without using the first function, and the address of the first thread-local variable in the first process is uniquely determined. When the updated patch file is being run, the first thread-local variable may be directly invoked through the address of the first thread-local variable in the first process. In this way, the first process is patched, to fix a defect in the first process.

The following describes a patching method provided in this application with reference to a specific example.

This application is applicable to a scenario of patching a datacom V8 platform. This application is also applicable to scenarios of patching wireless and optical product lines. A patch management mechanism is encapsulated and implemented based on a patching mechanism of DOPRA. In ARM32 and ILP32 environments for the wireless product line and an ARM32 environment for the optical product line, it is verified that global and static thread-local variables in a process/dynamic library can be referenced in a patch.

For example, the datacom V8 platform may be patched.

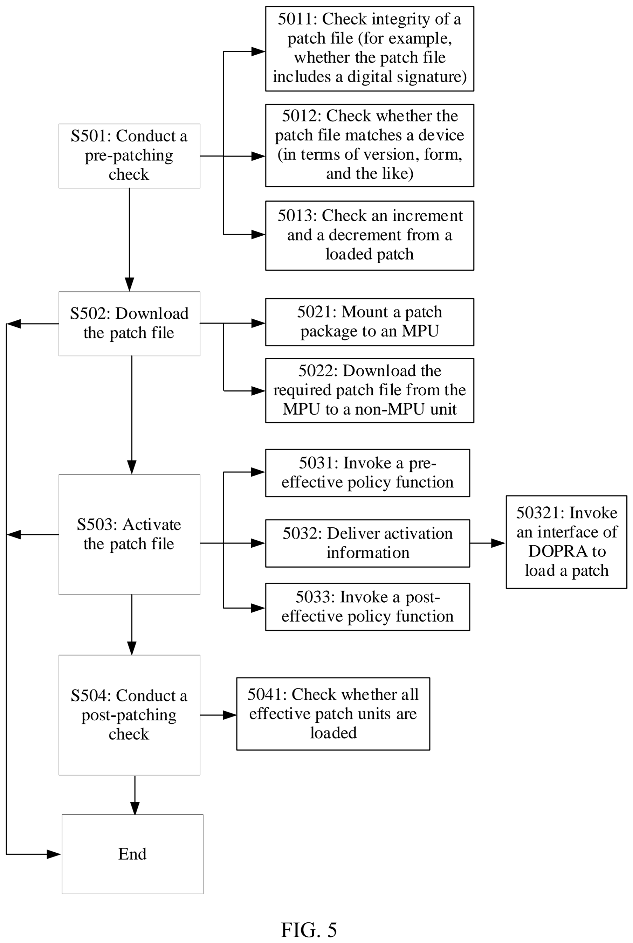

FIG. 5 shows a patch loading process on a datacom V8 platform. When a patch file is being loaded and run, a patch loading interface provided by DOPRA is invoked. Implementation of obtaining a module ID for a thread-local variable designed in the present invention is integrated into a patch file loading and running process. When a thread-local variable in a process/dynamic library is referenced in the patch file, an interface designed in the present invention is used, so that after the patch file is loaded to a board, an address of the thread-local variable can be obtained successfully. In this way, a patch can take effect normally, to resolve a problem.

S501: Conduct a pre-patching check.

S501 further includes the following several steps:
5011: Check integrity of a patch file (for example, whether the patch file includes a digital signature).
5012: Check whether the patch file matches a device (in terms of version, form, and the like).
5013: Check an increment and a decrement from a loaded patch.
S502: Download the patch file.
S502 further includes the following several steps:
5021: Mount a patch package to an MPU.
5022: Download the required patch file from the MPU to a non-MPU unit.
S503: Activate the patch file.
S503 further includes the following several steps:
5031: Invoke a pre-effective policy function.
5032: Deliver activation information.

Delivering the activation information includes 50321: Invoke an interface of DOPRA to load a patch.

5033: Invoke a post-effective policy function.

S504: Conduct a post-patching check.

Conducting the post-patching check further includes 5041: Check whether all effective patch units are loaded.

It should be noted that if an error occurs in any one of S502, S503, and S504, the patching process may be ended.

For example, a test patch is applied to the datacom V8 platform. A global thread-local variable g_iTlsId and static thread-local variable gStatic_iTlsId in a process (monitor process) and a global thread-local variable g_iDllTlsId and static thread-local variable gStatic_iDllTlsId in a dynamic library (libpatch_dopra.so dynamic library) are referenced in the patch file.

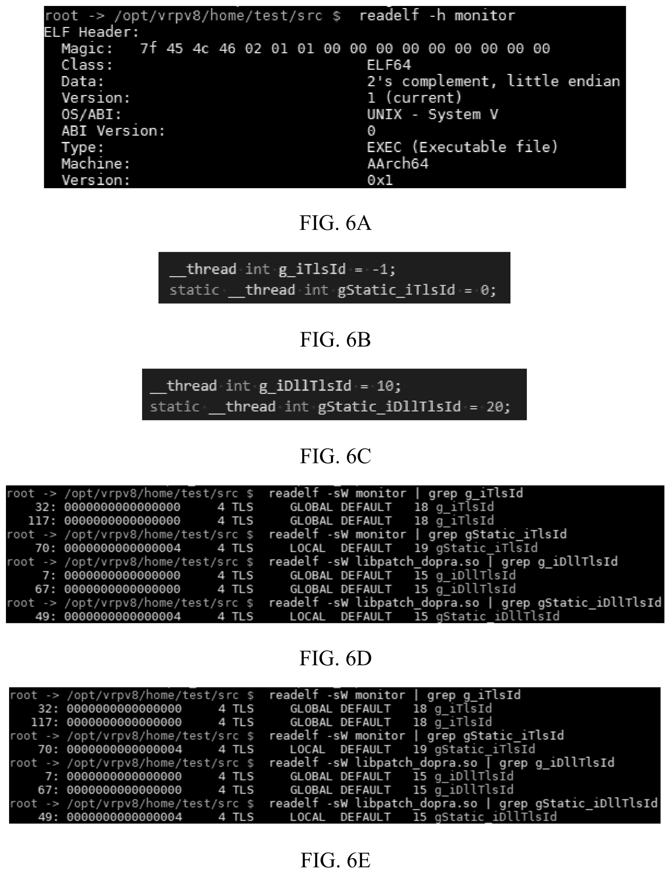

FIG. 6A is a diagram of a code implementation in an ARM64 environment.

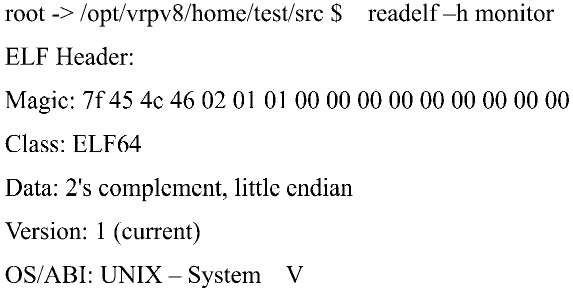

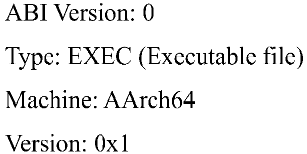

FIG. 6B shows a code implementation of a thread-local variable defined in a process.

```
_thread int g_iTlsId-=-1;
          static_thread int gStatic_iTlsId = 0;
```

FIG. 6C shows a code implementation of a thread-local variable defined in a dynamic library.

```
          _thread int g_iDl1TlsId-= 10;
          static_thread int gStatic_iDllT1sId = 20;
```

FIG. 6D shows a code implementation of a patch file in which a thread-local variable in a process and a thread-local variable in a dynamic library are referenced.

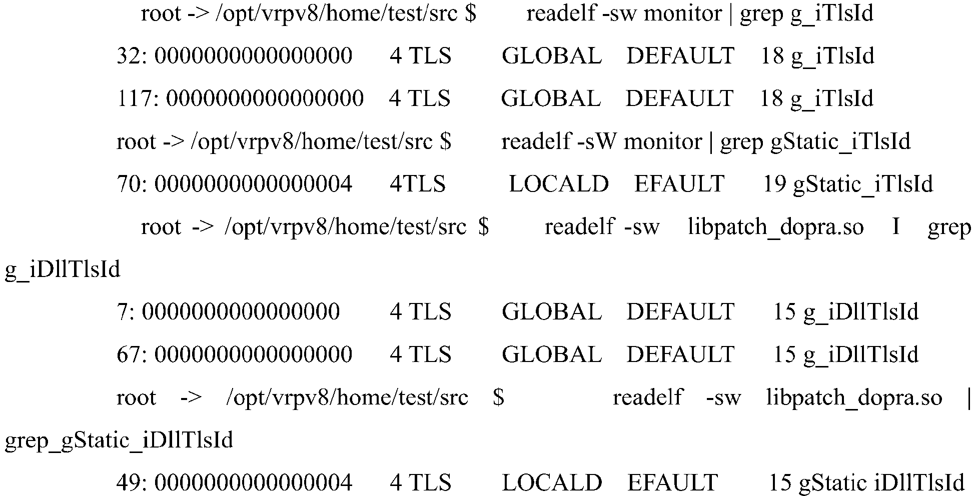

After the patch file is loaded and activated, if values of the thread-local variables can be printed, the thread-local variables are successfully referenced in the patch file.

FIG. 6E shows a code implementation of successfully referencing thread-local variables in a patch file.

```
          root -> /opt/vrpv8/home/test/src $ ./monitor
          call patch func SISP_PAT_PatchRestoreForTargetLib
          g_iTlsId = -1
          gStatic_iTlsId = 0
          g_iDllT1sId = 10
          gStatic iDllT1sId =20
```

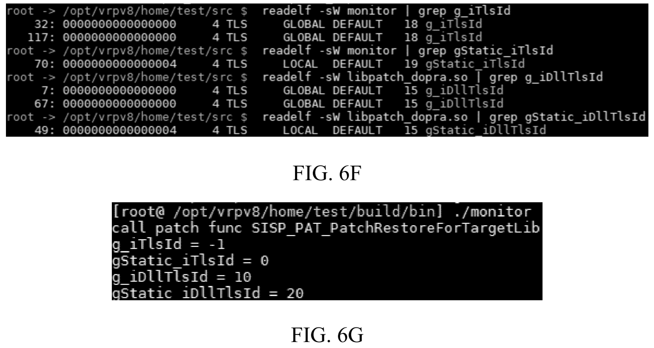

FIG. 6F shows another code implementation of a patch file in which a thread-local variable in a process and a thread-local variable in a dynamic library are referenced.

For example, in an x64 environment:

| | |
|---|---|
| root@ /opt/vrpv8/home/test/build/bin] readelf -h monitor | |
| ELF Header: | |
| Magic: | 7f 45 4c 46 02 01 01 00 00 00 00 00 00 00 00 00 |
| class: | ELF64 |
| Data: | 2's complement, little endian |
| Version: | 1 (current) |
| OS/ABI: | UNIX - System V |
| ABI Version: | 0 |
| Type: | EXEC (Executable file) |
| Machine: | Advanced Micro Devices X86-64 |
| Version: | 0x1 |

After the patch file is loaded and activated, if values of the thread-local variables can be printed, the thread-local variables are successfully referenced in the patch file.

FIG. 6G shows another code implementation of successfully referencing thread-local variables in a patch file.

```
          [root@ /opt/vrpv8/home/test/build/bin] ./monitor
          call patch func SISP_PAT_PatchRestoreForTargetLib
          g_iTlsId = -1
          gStatic_iTlsId = 0
          g_iDllT1sId = 10
          gStatic iDllT1sId = 20
```

In another embodiment, a patching method for the wireless and optical product lines is similar to that for the datacom platform. A patch management mechanism is encapsulated and implemented based on the patching mechanism of DOPRA. In the ARM32 and ILP32 environments for the wireless product line and the ARM32 environment for the optical product line, a global thread-local variable and static thread-local variable in a process/dynamic library can be referenced in the patch.

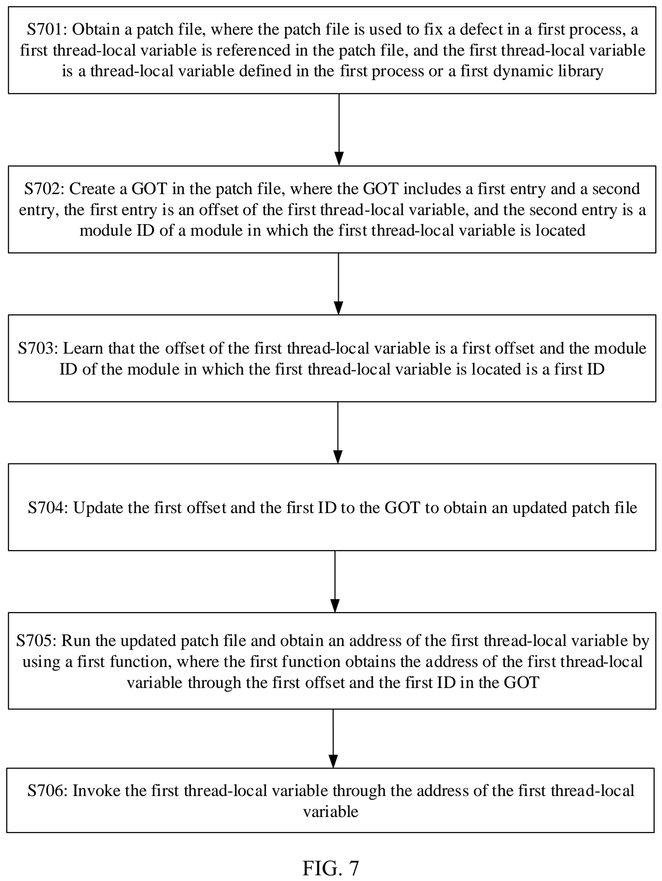

FIG. 7 is a schematic flowchart of a function execution method according to this application.

S701: Obtain a patch file. The patch file is used to fix a defect in a first process. A first thread-local variable is referenced in the patch file. The first thread-local variable is a thread-local variable defined in the first process or a first dynamic library.

S702: Create a GOT in the patch file. The GOT includes a first entry and a second entry. The first entry is an offset of the first thread-local variable. The second entry is a module ID of a module in which the first thread-local variable is located.

S703: Learn that the offset of the first thread-local variable is a first offset and the module ID of the module in which the first thread-local variable is located is a first ID.

S704: Update the first offset and the first ID to the GOT to obtain an updated patch file.

In a possible implementation, updating the first offset and the first ID to the GOT to obtain the updated patch file specifically includes: before the patch file is loaded, learning that the offset of the first thread-local variable is the first offset, setting the module ID of the module in which the first thread-local variable is located to a second value, and updating the first offset and the second value to the GOT; and after the patch file is loaded, learning that the module ID of the module in which the first thread-local variable is located is a first value, and changing the module ID of the module in which the first thread-local variable is located in the GOT from the second value to the first value, to obtain the updated patch file. In this way, whether the first thread-local variable is a thread-local variable in a process or a thread-local variable in a dynamic library is not distinguished. The module ID of the module in which the first thread-local variable is located is obtained after the patch file is loaded.

In a possible implementation, updating the first offset and the first ID to the GOT to obtain the updated patch file specifically includes: before the patch file is loaded, if the first thread-local variable is a thread-local variable defined in the first dynamic library, learning that the offset of the first thread-local variable is the first offset, setting the module ID of the module in which the first thread-local variable is located to the second value, and updating the first offset and the second value to the GOT; and after the patch file is loaded, if the first thread-local variable is a thread-local variable defined in the first dynamic library, learning that the module ID of the module in which the first thread-local variable is located is the first value, and changing the module ID of the module in which the first thread-local variable is located in the GOT from the second value to the first value, to obtain the updated patch file. In this way, whether the first thread-local variable is a thread-local variable in the first process or a thread-local variable in the first dynamic library needs to be distinguished. If the first thread-local variable is a thread-local variable in the first dynamic library, a dynamic library ID of the first dynamic library in which the first thread-local variable is located is obtained after the patch file is loaded.

For example, an interface dl_iterate_phdr may be invoked to access all loaded dynamic libraries. A value of a ti_ module field when a dynamic library is loaded is obtained. The value is a dynamic library ID of the dynamic library.

In a possible implementation, the method further includes: before the patch file is loaded, if the first thread-local variable is a thread-local variable defined in the first process, learning that the offset of the first thread-local variable is the first offset and the module ID of the module in which the first thread-local variable is located is the first ID, and updating the first offset and the first ID to the GOT, to obtain the updated patch file. In this way, whether the first thread-local variable is a thread-local variable in the first process or a thread-local variable in the first dynamic library needs to be distinguished. If the first thread-local variable is a thread-local variable in the first process, a process ID of the first process in which the first thread-local variable is located may be obtained before the patch file is loaded.

S705: Run the updated patch file and obtain an address of the first thread-local variable by using a first function. The first function obtains the address of the first thread-local variable through the first offset and the first ID in the GOT.

In a possible implementation, before obtaining the address of the first thread-local variable by using the first function, the method further includes: obtaining a first instruction that references the first thread-local variable in the patch file; and changing the first instruction to a second instruction if the first instruction is obtaining the address of the first thread-local variable without using a function. The second instruction is obtaining the address of the first thread-local variable by using the first function. Running the updated patch file and obtaining the address of the first thread-local variable by using the first function specifically includes: running the updated patch file and executing the second instruction in the updated patch file to obtain the address of the first thread-local variable by using the first function. In this way, the first instruction is changed to the second instruction if the first thread-local variable is a thread-local variable in the first process and/or the first dynamic library and the first instruction is obtaining the address of the first thread-local variable without using a function. The second instruction is obtaining the address of the first thread-local variable by using a system function. This ensures that the patch file can normally invoke the first thread-local variable in the first process, and can also invoke the first thread-local variable in the first dynamic library.

In a possible implementation, changing the first instruction to the second instruction if the first instruction is obtaining the address of the first thread-local variable without using a function specifically includes: changing the first instruction to the second instruction if the first instruction is obtaining the address of the first thread-local variable without using a function and the first thread-local variable is a thread-local variable defined in the first dynamic library. In this way, the first instruction is changed to the second instruction only if the first thread-local variable is a thread-local variable defined in the first dynamic library, to ensure that the patch file can normally invoke the first thread-local variable in the first dynamic library.

In a possible implementation, the method further includes: if the first thread-local variable is a thread-local variable defined in the first process, running the updated patch file and executing the first instruction in the updated patch file to obtain the address of the first thread-local variable.

In a possible implementation, a first thread control block stores content of a section in which the first thread-local variable is located in the first dynamic library or the first process. The first thread control block is used to store data for a first thread to invoke the first thread-local variable. The first ID is a dynamic library ID of the first dynamic library or a process ID of the first process. Obtaining the address of the first thread-local variable by using the first function specifically includes: obtaining addresses of a plurality of thread control blocks based on the first ID by using the first function; obtaining an address of the first thread control block from the addresses of the plurality of thread control blocks based on an ID of the first thread; obtaining the address of the first thread-local variable based on the address of the first thread control block and the first offset by using the first function; and transferring the address of the first thread-local variable to the first thread by using the first function. In this way, regardless of whether the first thread-local variable is a thread-local variable in the first process or a thread-local variable in the first dynamic library, the address of the first thread-local variable is obtained by using the first function.

In a possible implementation, a first thread control block stores content of a section in which the first thread-local variable is located in the first dynamic library. The first thread control block is used to store data for a first thread to invoke the first thread-local variable. The first ID is a dynamic library ID of the first dynamic library. Obtaining the address of the first thread-local variable by using the first function specifically includes: obtaining addresses of a plurality of thread control blocks based on the first ID by using the first function; obtaining an address of the first thread control block from the addresses of the plurality of thread control blocks based on an ID of the first thread by using the first function; obtaining the address of the first thread-local variable based on the address of the first thread control block and the first offset by using the first function; and transferring the address of the first thread-local variable to the first thread by using the first function. In this way, whether the first thread-local variable is a thread-local variable in the first process or a thread-local variable in the first dynamic library needs to be distinguished. If the first thread-local variable is a thread-local variable in the first dynamic library, the address of the first thread-local variable is obtained by using the first function.

In a possible implementation, a first thread control block stores content of a section in which the first thread-local variable is located in the first process. The first thread control block is used to store data for a first thread to invoke the first thread-local variable. The first ID is a process ID of the first process. Running the updated patch file and executing the first instruction in the updated patch file to obtain the address of the first thread-local variable specifically includes:
running the updated patch file and executing the first instruction in the updated patch file;
in response to the first instruction, obtaining a start address of the first process by using the first process;
determining addresses of a plurality of thread control blocks based on the start address of the first process, a second offset, and a third offset by using the first process, where the second offset is an offset of the first thread-local variable defined in the first process from the first instruction in the first process, and the third offset is a preset value;
obtaining an address of the first thread control block from the addresses of the plurality of thread control blocks based on an ID of the first thread by using the first process;
obtaining the address of the first thread-local variable based on the address of the first thread control block and the first offset by using the first process; and
transferring the address of the first thread-local variable to the first thread by using the first process.

The third offset may be a size of one thread control block.

In this way, if the first thread-local variable is a thread-local variable in the first process, the address of the first thread-local variable may be directly obtained by using the first process.

S706: Invoke the first thread-local variable through the address of the first thread-local variable.

Through this method, the patch file can invoke a thread-local variable in a process and a thread-local variable in a dynamic library.

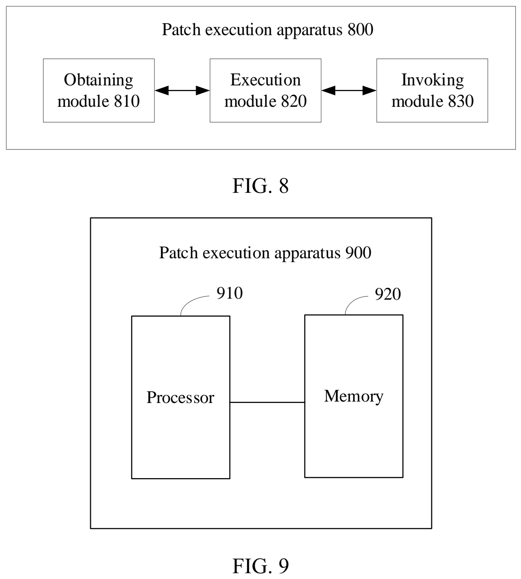

FIG. 8 is a diagram of a patch execution apparatus according to this application.

As shown in FIG. 8, the patch execution apparatus 800 includes an obtaining module 810, an execution module 820, and an invoking module 830.

The obtaining module 810 is configured to obtain a patch file. The patch file is used to fix a defect in a first process. A first thread-local variable is referenced in the patch file. The first thread-local variable is a thread-local variable defined in the first process or a first dynamic library.

The execution module 820 is configured to: create a GOT in the patch file, where the GOT includes a first entry and a second entry, the first entry is an offset of the first thread-local variable, and the second entry is a module ID of a module in which the first thread-local variable is located; learn that the offset of the first thread-local variable is a first offset and the module ID of the module in which the first thread-local variable is located is a first ID; update the first offset and the first ID to the GOT to obtain an updated patch file; and run the updated patch file and obtain an address of the first thread-local variable by using a first function. The first function obtains the address of the first thread-local variable through the first offset and the first ID in the GOT.

The invoking module 830 is configured to invoke the first thread-local variable through the address of the first thread-local variable.

Through this method, the patch file can invoke a thread-local variable in a process and a thread-local variable in a dynamic library.

In a possible implementation, the execution module 820 is further configured to: obtain a first instruction that references the first thread-local variable in the patch file; and change the first instruction to a second instruction if the first instruction is obtaining the address of the first thread-local variable without using a function. The second instruction is obtaining the address of the first thread-local variable by using the first function. The execution module 820 is specifically configured to run the updated patch file and execute the second instruction in the updated patch file to obtain the address of the first thread-local variable by using the first function.

In this way, the first instruction is changed to the second instruction if the first thread-local variable is a thread-local variable in the first process and/or the first dynamic library and the first instruction is obtaining the address of the first thread-local variable without using a function. The second instruction is obtaining the address of the first thread-local variable by using a system function. This ensures that the patch file can normally invoke the first thread-local variable in the first process, and can also invoke the first thread-local variable in the first dynamic library.

In a possible implementation, the execution module 820 is specifically configured to change the first instruction to the second instruction if the first instruction is obtaining the address of the first thread-local variable without using a function and the first thread-local variable is a thread-local variable defined in the first dynamic library.

In this way, the first instruction is changed to the second instruction only if the first thread-local variable is a thread-local variable defined in the first dynamic library, to ensure that the patch file can normally invoke the first thread-local variable in the first dynamic library.

In a possible implementation, the execution module 820 is further configured to: if the first thread-local variable is a thread-local variable defined in the first process, run the updated patch file and execute the first instruction in the updated patch file to obtain the address of the first thread-local variable.

The first instruction is obtaining the address of the first thread-local variable by using the first process. In this way, if the first thread-local variable is a thread-local variable defined in the first process, the first process may directly obtain the address of the first thread-local variable, and therefore the first instruction does not need to be changed to the second instruction.

In a possible implementation, the execution module 820 is specifically configured to: before the patch file is loaded, learn that the offset of the first thread-local variable is the first offset, set the module ID of the module in which the first thread-local variable is located to a second value, and update the first offset and the second value to the GOT; and after the patch file is loaded, learn that the module ID of the module in which the first thread-local variable is located is a first value, and change the module ID of the module in which the first thread-local variable is located in the GOT from the second value to the first value, to obtain the updated patch file.

In this way, whether the first thread-local variable is a thread-local variable in a process or a thread-local variable in a dynamic library is not distinguished. The module ID of the module in which the first thread-local variable is located is obtained after the patch file is loaded.

In a possible implementation, the execution module 820 is specifically configured to: before the patch file is loaded, if the first thread-local variable is a thread-local variable defined in the first dynamic library, learn that the offset of the first thread-local variable is the first offset, set the module ID of the module in which the first thread-local variable is located to the second value, and update the first offset and the second value to the GOT; and after the patch file is loaded, if the first thread-local variable is a thread-local variable defined in the first dynamic library, learn that the module ID of the module in which the first thread-local variable is located is the first value, and change the module ID of the module in which the first thread-local variable is located in the GOT from the second value to the first value, to obtain the updated patch file.

In this way, whether the first thread-local variable is a thread-local variable in the first process or a thread-local variable in the first dynamic library needs to be distinguished. If the first thread-local variable is a thread-local variable in the first dynamic library, a dynamic library ID of the first dynamic library in which the first thread-local variable is located is obtained after the patch file is loaded.

In a possible implementation, the execution module 820 is further configured to: before the patch file is loaded, if the first thread-local variable is a thread-local variable defined in the first process, learn that the offset of the first thread-local variable is the first offset and the module ID of the module in which the first thread-local variable is located is the first ID, and update the first offset and the first ID to the GOT, to obtain the updated patch file.

In this way, whether the first thread-local variable is a thread-local variable in the first process or a thread-local variable in the first dynamic library needs to be distinguished. If the first thread-local variable is a thread-local variable in the first process, a process ID of the first process in which the first thread-local variable is located may be obtained before the patch file is loaded.

In a possible implementation, a first thread control block stores content of a section in which the first thread-local variable is located in the first dynamic library or the first process. The first thread control block is used to store data for a first thread to invoke the first thread-local variable. The first ID is a dynamic library ID of the first dynamic library or a process ID of the first process. The obtaining module 810 is specifically configured to: obtain addresses of a plurality of thread control blocks based on the first ID by using the first function; obtain an address of the first thread control block from the addresses of the plurality of thread control blocks based on an ID of the first thread; obtain the address of the first thread-local variable based on the address of the first thread control block and the first offset by using the first function; and transfer the address of the first thread-local variable to the first thread by using the first function.

In this way, regardless of whether the first thread-local variable is a thread-local variable in the first process or a thread-local variable in the first dynamic library, the address of the first thread-local variable is obtained by using the first function.

In a possible implementation, a first thread control block stores content of a section in which the first thread-local variable is located in the first dynamic library. The first thread control block is used to store data for a first thread to invoke the first thread-local variable. The first ID is a dynamic library ID of the first dynamic library. The obtaining module 810 is specifically configured to: obtain addresses of a plurality of thread control blocks based on the first ID by using the first function; obtain an address of the first thread control block from the addresses of the plurality of thread control blocks based on an ID of the first thread by using the first function; obtain the address of the first thread-local variable based on the address of the first thread control block and the first offset by using the first function; and transfer the address of the first thread-local variable to the first thread by using the first function.

In this way, whether the first thread-local variable is a thread-local variable in the first process or a thread-local variable in the first dynamic library needs to be distinguished. If the first thread-local variable is a thread-local variable in the first dynamic library, the address of the first thread-local variable is obtained by using the first function.

In a possible implementation, a first thread control block stores content of a section in which the first thread-local variable is located in the first process. The first thread control block is used to store data for a first thread to invoke the first thread-local variable. The first ID is a process ID of the first process. The obtaining module 810 is specifically configured to:
run the updated patch file and execute the first instruction in the updated patch file;
in response to the first instruction, obtain a start address of the first process by using the first process;
determine addresses of a plurality of thread control blocks based on the start address of the first process, a second offset, and a third offset by using the first process, where the second offset is an offset of the first thread-local variable defined in the first process from the first instruction in the first process, and the third offset is a preset value;
obtain an address of the first thread control block from the addresses of the plurality of thread control blocks based on an ID of the first thread by using the first process;
obtain the address of the first thread-local variable based on the address of the first thread control block and the first offset by using the first process; and
transfer the address of the first thread-local variable to the first thread by using the first process.

The third offset may be a size of one thread control block.

In this way, if the first thread-local variable is a thread-local variable in the first process, the address of the first thread-local variable may be directly obtained by using the first process.

FIG. 9 is a diagram of another patch execution apparatus 900 according to this application.

As shown in FIG. 9, the patch execution apparatus 900 includes a memory 920 and a processor 910.

The memory 920 is configured to store computer program code. The computer program code includes computer instructions.

The processor 910 invokes the computer instructions, to enable the patch execution apparatus 900 to:
obtain a patch file, where the patch file is used to fix a defect in a first process, a first thread-local variable is referenced in the patch file, and the first thread-local variable is a thread-local variable defined in the first process or a first dynamic library;
create a GOT in the patch file, where the GOT includes a first entry and a second entry, the first entry is an offset of the first thread-local variable, and the second entry is a module ID of a module in which the first thread-local variable is located;
learn that the offset of the first thread-local variable is a first offset and the module ID of the module in which the first thread-local variable is located is a first ID;
update the first offset and the first ID to the GOT to obtain an updated patch file;
run the updated patch file and obtain an address of the first thread-local variable by using a first function, where the first function obtains the address of the first thread-local variable through the first offset and the first ID in the GOT; and
invoke the first thread-local variable through the address of the first thread-local variable.

In this way, the patch file can invoke a thread-local variable in a process and a thread-local variable in a dynamic library.

In a possible implementation, the processor 910 invokes the computer instructions, to enable the patch execution apparatus 900 to:
obtain a first instruction that references the first thread-local variable in the patch file;
change the first instruction to a second instruction if the first instruction is obtaining the address of the first thread-local variable without using a function, where the second instruction is obtaining the address of the first thread-local variable by using the first function; and
run the updated patch file and execute the second instruction in the updated patch file to obtain the address of the first thread-local variable by using the first function.

In this way, the first instruction is changed to the second instruction if the first thread-local variable is a thread-local variable in the first process and/or the first dynamic library and the first instruction is obtaining the address of the first thread-local variable without using a function. The second instruction is obtaining the address of the first thread-local variable by using a system function. This ensures that the patch file can normally invoke the first thread-local variable in the first process, and can also invoke the first thread-local variable in the first dynamic library.

In a possible implementation, the processor 910 invokes the computer instructions, to enable the patch execution apparatus 900 to:
change the first instruction to the second instruction if the first instruction is obtaining the address of the first thread-local variable without using a function and the first thread-local variable is a thread-local variable defined in the first dynamic library.

In this way, the first instruction is changed to the second instruction only if the first thread-local variable is a thread-local variable defined in the first dynamic library, to ensure that the patch file can normally invoke the first thread-local variable in the first dynamic library.

In a possible implementation, the processor 910 invokes the computer instructions, to enable the patch execution apparatus 900 to:
if the first thread-local variable is a thread-local variable defined in the first process, run the updated patch file and execute the first instruction in the updated patch file to obtain the address of the first thread-local variable.

The first instruction is obtaining the address of the first thread-local variable by using the first process. In this way, if the first thread-local variable is a thread-local variable defined in the first process, the first process may directly obtain the address of the first thread-local variable, and therefore the first instruction does not need to be changed to the second instruction.

In a possible implementation, the processor 910 invokes the computer instructions, to enable the patch execution apparatus 900 to:
before the patch file is loaded, learn that the offset of the first thread-local variable is the first offset, set the module ID of the module in which the first thread-local variable is located to a second value, and update the first offset and the second value to the GOT; and
after the patch file is loaded, learn that the module ID of the module in which the first thread-local variable is located is a first value, and change the module ID of the module in which the first thread-local variable is located in the GOT from the second value to the first value, to obtain the updated patch file.

In this way, whether the first thread-local variable is a thread-local variable in a process or a thread-local variable in a dynamic library is not distinguished. The module ID of the module in which the first thread-local variable is located is obtained after the patch file is loaded.

In a possible implementation, the processor 910 invokes the computer instructions, to enable the patch execution apparatus 900 to:
before the patch file is loaded, if the first thread-local variable is a thread-local variable defined in the first dynamic library, learn that the offset of the first thread-local variable is the first offset, set the module ID of the module in which the first thread-local variable is located to the second value, and update the first offset and the second value to the GOT; and
after the patch file is loaded, if the first thread-local variable is a thread-local variable defined in the first dynamic library, learn that the module ID of the module in which the first thread-local variable is located is the first value, and change the module ID of the module in which the first thread-local variable is located in the GOT from the second value to the first value, to obtain the updated patch file.

In this way, whether the first thread-local variable is a thread-local variable in the first process or a thread-local variable in the first dynamic library needs to be distinguished. If the first thread-local variable is a thread-local variable in the first dynamic library, a dynamic library ID of the first dynamic library in which the first thread-local variable is located is obtained after the patch file is loaded.

In a possible implementation, the processor 910 invokes the computer instructions, to enable the patch execution apparatus 900 to:
before the patch file is loaded, if the first thread-local variable is a thread-local variable defined in the first process, learn that the offset of the first thread-local variable is the first offset and the module ID of the module in which the first thread-local variable is located is the first ID, and update the first offset and the first ID to the GOT, to obtain the updated patch file.

In this way, whether the first thread-local variable is a thread-local variable in the first process or a thread-local variable in the first dynamic library needs to be distinguished. If the first thread-local variable is a thread-local variable in the first process, a process ID of the first process in which the first thread-local variable is located may be obtained before the patch file is loaded.

In a possible implementation, a first thread control block stores content of a section in which the first thread-local variable is located in the first dynamic library or the first process. The first thread control block is used to store data for a first thread to invoke the first thread-local variable. The first ID is a dynamic library ID of the first dynamic library or a process ID of the first process.

The processor 910 invokes the computer instructions, to enable the patch execution apparatus 900 to:
obtain addresses of a plurality of thread control blocks based on the first ID by using the first function;
obtain an address of the first thread control block from the addresses of the plurality of thread control blocks based on an ID of the first thread; and
obtain the address of the first thread-local variable based on the address of the first thread control block and the first offset by using the first function; and transfer the address of the first thread-local variable to the first thread by using the first function.

In this way, regardless of whether the first thread-local variable is a thread-local variable in the first process or a thread-local variable in the first dynamic library, the address of the first thread-local variable is obtained by using the first function.

In a possible implementation, a first thread control block stores content of a section in which the first thread-local variable is located in the first dynamic library. The first thread control block is used to store data for a first thread to invoke the first thread-local variable. The first ID is a dynamic library ID of the first dynamic library.

The processor 910 invokes the computer instructions, to enable the patch execution apparatus 900 to:
obtain addresses of a plurality of thread control blocks based on the first ID by using the first function;
obtain an address of the first thread control block from the addresses of the plurality of thread control blocks based on an ID of the first thread by using the first function; and
obtain the address of the first thread-local variable based on the address of the first thread control block and the first offset by using the first function; and transfer the address of the first thread-local variable to the first thread by using the first function.

In this way, whether the first thread-local variable is a thread-local variable in the first process or a thread-local variable in the first dynamic library needs to be distinguished. If the first thread-local variable is a thread-local variable in the first dynamic library, the address of the first thread-local variable is obtained by using the first function.

In a possible implementation, a first thread control block stores content of a section in which the first thread-local variable is located in the first process. The first thread control block is used to store data for a first thread to invoke the first thread-local variable. The first ID is a process ID of the first process.

The processor 910 invokes the computer instructions, to enable the patch execution apparatus 900 to:
run the updated patch file and execute the first instruction in the updated patch file;
in response to the first instruction, obtain a start address of the first process by using the first process;
determine addresses of a plurality of thread control blocks based on the start address of the first process, a second offset, and a third offset by using the first process, where the second offset is an offset of the first thread-local variable defined in the first process from the first instruction in the first process, and the third offset is a preset value;
obtain an address of the first thread control block from the addresses of the plurality of thread control blocks based on an ID of the first thread by using the first process;
obtain the address of the first thread-local variable based on the address of the first thread control block and the first offset by using the first process; and
transfer the address of the first thread-local variable to the first thread by using the first process.

The third offset may be a size of one thread control block.

In this way, if the first thread-local variable is a thread-local variable in the first process, the address of the first thread-local variable may be directly obtained by using the first process.

This application provides a computer-readable storage medium. When a computer program product is run on a function tracing apparatus, the function tracing apparatus is enabled to perform the function tracing method shown in FIG. 7.

This application provides a computer program product. When the computer program product is run on a function tracing apparatus, the function tracing apparatus is enabled to perform the function tracing method shown in FIG. 7.

The implementations of this application may be randomly combined to achieve different technical effects.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

A person of ordinary skill in the art may understand that all or some of the processes of the methods in embodiments may be implemented by a computer program instructing relevant hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made according to the disclosure of the present invention shall fall within the protection scope of the present invention.

## Claims

1. A patch execution method, wherein the method comprises:
obtaining a patch file, wherein the patch file is used to fix a defect in a first process, a first thread-local variable is referenced in the patch file, and the first thread-local variable is a thread-local variable defined in the first process or a first dynamic library;
creating a GOT in the patch file, wherein the GOT comprises a first entry and the second entry, the first entry is an offset of the first thread-local variable, and the second entry is a module ID of a module in which the first thread-local variable is located;
learning that the offset of the first thread-local variable is a first offset and the module ID of the module in which the first thread-local variable is located is a first ID;
updating the first offset and the first ID to the GOT to obtain an updated patch file;
running the updated patch file and obtaining an address of the first thread-local variable by using a first function, wherein the first function obtains the address of the first thread-local variable through the first offset and the first ID in the GOT; and
invoking the first thread-local variable through the address of the first thread-local variable.

2. The method according to claim 1, wherein before obtaining the address of the first thread-local variable by using the first function, the method further comprises:
obtaining a first instruction that references the first thread-local variable in the patch file; and
changing the first instruction to a second instruction if the first instruction is obtaining the address of the first thread-local variable without using a function, wherein the second instruction is obtaining the address of the first thread-local variable by using the first function; and
running the updated patch file and obtaining the address of the first thread-local variable by using the first function specifically comprises:
running the updated patch file and executing the second instruction in the updated patch file to obtain the address of the first thread-local variable by using the first function.

3. The method according to claim 2, wherein changing the first instruction to the second instruction if the first instruction is obtaining the address of the first thread-local variable without using a function specifically comprises:
changing the first instruction to the second instruction if the first instruction is obtaining the address of the first thread-local variable without using a function and the first thread-local variable is a thread-local variable defined in the first dynamic library.

4. The method according to claim 3, wherein the method further comprises:
if the first thread-local variable is a thread-local variable defined in the first process, running the updated patch file and executing the first instruction in the updated patch file to obtain the address of the first thread-local variable.

5. The method according to claim 2 or 3, wherein updating the first offset and the first ID to the GOT to obtain the updated patch file specifically comprises:
before the patch file is loaded, learning that the offset of the first thread-local variable is the first offset, setting the module ID of the module in which the first thread-local variable is located to a second value, and updating the first offset and the second value to the GOT; and
after the patch file is loaded, learning that the module ID of the module in which the first thread-local variable is located is the first value, and changing the module ID of the module in which the first thread-local variable is located in the GOT from the second value to the first value, to obtain the updated patch file.

6. The method according to claim 5, wherein updating the first offset and the first ID to the GOT to obtain the updated patch file specifically comprises:
before the patch file is loaded, if the first thread-local variable is a thread-local variable defined in the first dynamic library, learning that the offset of the first thread-local variable is the first offset, setting the module ID of the module in which the first thread-local variable is located to the second value, and updating the first offset and the second value to the GOT; and
after the patch file is loaded, if the first thread-local variable is a thread-local variable defined in the first dynamic library, learning that the module ID of the module in which the first thread-local variable is located is the first value, and changing the module ID of the module in which the first thread-local variable is located in the GOT from the second value to the first value, to obtain the updated patch file.

7. The method according to claim 5 or 6, wherein the method further comprises:
before the patch file is loaded, if the first thread-local variable is a thread-local variable defined in the first process, learning that the offset of the first thread-local variable is the first offset and the module ID of the module in which the first thread-local variable is located is the first ID, and updating the first offset and the first ID to the GOT, to obtain the updated patch file.

8. The method according to any one of claims 1 to 7, wherein a first thread control block stores content of a section in which the first thread-local variable is located in the first dynamic library or the first process, the first thread control block is used to store data for a first thread to invoke the first thread-local variable, and the first ID is a dynamic library ID of the first dynamic library or a process ID of the first process; and
obtaining the address of the first thread-local variable by using the first function specifically comprises:
obtaining addresses of a plurality of thread control blocks based on the first ID by using the first function;
obtaining an address of the first thread control block from the addresses of the plurality of thread control blocks based on an ID of the first thread; and
obtaining the address of the first thread-local variable based on the address of the first thread control block and the first offset by using the first function.

9. The method according to claim 2 or 3, wherein a first thread control block stores content of a section in which the first thread-local variable is located in the first dynamic library, the first thread control block is used to store data for a first thread to invoke the first thread-local variable, and the first ID is a dynamic library ID of the first dynamic library; and
obtaining the address of the first thread-local variable by using the first function specifically comprises:
obtaining addresses of a plurality of thread control blocks based on the first ID by using the first function;
obtaining an address of the first thread control block from the addresses of the plurality of thread control blocks based on an ID of the first thread by using the first function;
obtaining the address of the first thread-local variable based on the address of the first thread control block and the first offset by using the first function; and
transferring the address of the first thread-local variable to the first thread by using the first function.

10. The method according to claim 4, wherein a first thread control block stores content of a section in which the first thread-local variable is located in the first process, the first thread control block is used to store data for a first thread to invoke the first thread-local variable, and the first ID is a process ID of the first process; and
running the updated patch file and executing the first instruction in the updated patch file to obtain the address of the first thread-local variable specifically comprises:
running the updated patch file and executing the first instruction in the updated patch file;
in response to the first instruction, obtaining a start address of the first process by using the first process;
determining addresses of a plurality of thread control blocks based on the start address of the first process, a second offset, and a third offset by using the first process, wherein the second offset is an offset of the first thread-local variable defined in the first process from the first instruction in the first process, and the third offset is a preset value;
obtaining an address of the first thread control block from the addresses of the plurality of thread control blocks based on an ID of the first thread by using the first process;
obtaining the address of the first thread-local variable based on the address of the first thread control block and the first offset by using the first process; and
transferring the address of the first thread-local variable to the first thread by using the first process.

11. A patch execution apparatus, wherein the apparatus comprises an obtaining module, an execution module, and an invoking module;
the obtaining module is configured to obtain a patch file, wherein the patch file is used to fix a defect in a first process, a first thread-local variable is referenced in the patch file, and the first thread-local variable is a thread-local variable defined in the first process or a first dynamic library;
the execution module is configured to: create a GOT in the patch file, wherein the GOT comprises a first entry and the second entry, the first entry is an offset of the first thread-local variable, and the second entry is a module ID of a module in which the first thread-local variable is located;
learn that the offset of the first thread-local variable is a first offset and the module ID of the module in which the first thread-local variable is located is a first ID;
update the first offset and the first ID to the GOT to obtain an updated patch file; and
run the updated patch file and obtain an address of the first thread-local variable by using a first function, wherein the first function obtains the address of the first thread-local variable through the first offset and the first ID in the GOT; and
the invoking module is configured to invoke the first thread-local variable through the address of the first thread-local variable.

12. The apparatus according to claim 11, wherein the execution module is further configured to: obtain a first instruction that references the first thread-local variable in the patch file; and
change the first instruction to a second instruction if the first instruction is obtaining the address of the first thread-local variable without using a function, wherein the second instruction is obtaining the address of the first thread-local variable by using the first function; and
the execution module is specifically configured to run the updated patch file and execute the second instruction in the updated patch file to obtain the address of the first thread-local variable by using the first function.

13. The apparatus according to claim 12, wherein the execution module is specifically configured to change the first instruction to the second instruction if the first instruction is obtaining the address of the first thread-local variable without using a function and the first thread-local variable is a thread-local variable defined in the first dynamic library.

14. The apparatus according to claim 13, wherein the execution module is further configured to: if the first thread-local variable is a thread-local variable defined in the first process, run the updated patch file and execute the first instruction in the updated patch file to obtain the address of the first thread-local variable.

15. The apparatus according to claim 12 or 13, wherein the execution module is specifically configured to: before the patch file is loaded, learn that the offset of the first thread-local variable is the first offset, set the module ID of the module in which the first thread-local variable is located to a second value, and update the first offset and the second value to the GOT; and
after the patch file is loaded, learn that the module ID of the module in which the first thread-local variable is located is the first value, and change the module ID of the module in which the first thread-local variable is located in the GOT from the second value to the first value, to obtain the updated patch file.

16. The apparatus according to claim 15, wherein the execution module is specifically configured to: before the patch file is loaded, if the first thread-local variable is a thread-local variable defined in the first dynamic library, learn that the offset of the first thread-local variable is the first offset, set the module ID of the module in which the first thread-local variable is located to the second value, and update the first offset and the second value to the GOT; and
after the patch file is loaded, if the first thread-local variable is a thread-local variable defined in the first dynamic library, learn that the module ID of the module in which the first thread-local variable is located is the first value, and change the module ID of the module in which the first thread-local variable is located in the GOT from the second value to the first value, to obtain the updated patch file.

17. The apparatus according to claim 15 or 16, wherein the execution module is further configured to: before the patch file is loaded, if the first thread-local variable is a thread-local variable defined in the first process, learn that the offset of the first thread-local variable is the first offset and the module ID of the module in which the first thread-local variable is located is the first ID, and update the first offset and the first ID to the GOT, to obtain the updated patch file.

18. The apparatus according to any one of claims 11 to 17, wherein a first thread control block stores content of a section in which the first thread-local variable is located in the first dynamic library or the first process, the first thread control block is used to store data for a first thread to invoke the first thread-local variable, and the first ID is a dynamic library ID of the first dynamic library or a process ID of the first process; and
the obtaining module is specifically configured to:
obtain addresses of a plurality of thread control blocks based on the first ID by using the first function;
obtain an address of the first thread control block from the addresses of the plurality of thread control blocks based on an ID of the first thread;
obtain the address of the first thread-local variable based on the address of the first thread control block and the first offset by using the first function; and
transfer the address of the first thread-local variable to the first thread by using the first function.

19. The apparatus according to claim 12 or 13, wherein a first thread control block stores content of a section in which the first thread-local variable is located in the first dynamic library, the first thread control block is used to store data for a first thread to invoke the first thread-local variable, and the first ID is a dynamic library ID of the first dynamic library; and
the obtaining module is specifically configured to:
obtain addresses of a plurality of thread control blocks based on the first ID by using the first function;
obtain an address of the first thread control block from the addresses of the plurality of thread control blocks based on an ID of the first thread by using the first function;
obtain the address of the first thread-local variable based on the address of the first thread control block and the first offset by using the first function; and
transfer the address of the first thread-local variable to the first thread by using the first function.

20. The apparatus according to claim 14, wherein a first thread control block stores content of a section in which the first thread-local variable is located in the first process, the first thread control block is used to store data for a first thread to invoke the first thread-local variable, and the first ID is a process ID of the first process; and
the obtaining module is specifically configured to:
run the updated patch file and execute the first instruction in the updated patch file;
in response to the first instruction, obtain a start address of the first process by using the first process;
determine addresses of a plurality of thread control blocks based on the start address of the first process, a second offset, and a third offset by using the first process, wherein the second offset is an offset of the first thread-local variable defined in the first process from the first instruction in the first process, and the third offset is a preset value;
obtain an address of the first thread control block from the addresses of the plurality of thread control blocks based on an ID of the first thread by using the first process;
obtain the address of the first thread-local variable based on the address of the first thread control block and the first offset by using the first process; and
transfer the address of the first thread-local variable to the first thread by using the first process.

21. A computer-readable storage medium, configured to store computer instructions, wherein when the computer instructions are run on a patch execution apparatus, the patch execution apparatus is enabled to perform the method according to any one of claims 1 to 10.

22. A computer program product, wherein when the computer program product is run on a patch execution apparatus, the patch execution apparatus is enabled to perform the method according to any one of claims 1 to 10.
